# EUROPEAN PATENT APPLICATION

(11) **EP 1 903 089 A1**
(43) Date of publication of application: **26.03.2008**
(21) Application number: 06781054.9
(22) Date of filing: 13.07.2006
(51) Int. Cl.: C09K 11/61, C09K 11/00, C09K 11/08, G01T 1/00, G21K 4/00, C01F 11/20

(54) **PRECURSOR OF HALIDE-TYPE PHOTOSTIMULABLE PHOSPHOR, HALIDE-TYPE PHOTOSTIMULABLE PHOSPHOR, RADIATION IMAGE CONVERSION PANEL, AND PROCESS FOR PRODUCING THEM**

(30) Priority: 13.07.2005 JP 2005204217; 14.07.2005 JP 2005205664; 09.08.2005 JP 2005230693
(71) Applicant: Konica Minolta Medical & Graphic, Inc., Hino-shi, Tokyo 191-8511 (JP)
(72) Inventor: MAEZAWA, Akihiro, Tokyo 163-0512 (JP); HONDA, Satoshi, Tokyo 16-30512 (JP); WAKAMATSU, Hideaki, Hino-shi, Tokyo 191-8511 (JP); NABETA, Hiroyuki, Hino-shi, Tokyo 191-8511 (JP)
(74) Representative: Alton, Andrew
(86) International application number: PCT/JP2006/313934
(87) International publication number: WO 2007/007829

(57) **Abstract**

This invention relates to a halide-containing stimulable phosphor having improved moisture resistance and luminance, and a process for producing the same. The halide-containing stimulable phosphor is **characterized in that**, among elements constituting the outermost surface and inside of the phosphor, there is a difference in composition ratio of a halogen element between the outermost surface and the inside of the phosphor. A radiation image conversion panel, which has been improved, for example, in moisture resistance, luminance and image quality by using the phosphor, and a process for producing the same are also provided.

## Description

### FIELD OF THE INVENTOION

The present invention relates to a halide-containing stimulable phosphor , specifically, a rare metal activated alkali- earth metal fluoride-bromide-containing stimulable phosphor, a production method thereof and a radiation image conversion panel employing the stimulable phosphor.

### BACKGROUND OF THE INVENTOION

As an alternative means for replacing conventional radiography, known is a recording and reproducing method of radiation images using stimulable phosphors (refer to Patent Document 1). In the method, a radiographic image conversion panel (hereinafter, also referred to as an image-accumulation type phosphor sheet) comprising a stimulable phosphor is employed, and the method comprises the steps of causing the stimulable phosphor of the panel to absorb radiation having passed through an object or having been radiated from an object, sequentially exciting the stimulable phosphor with an electromagnetic wave such as visible light or ultra violet rays (hereinafter referred to as "stimulating rays") to release the radiation energy stored in the phosphor as light emission (stimulated emission), photo-electrically detecting the emitted light to obtain electrical signals, and reproducing the radiation image of the object as a visible image from the electrical signals. The panel, having been read out, is then subjected to image-erasing and prepared for the next photographing cycle. Thus, the radiographic image conversion panel can be used for the next image formation.

In the radiation image recording and reproducing methods described above, a radiation image is advantageously obtained with a sufficient amount of information by applying radiation to an object at a considerably smaller dose, as compared to conventional radiography employing a combination of a radiographic film and a radiographic intensifying screen. Further, in conventional radiography, the radiographic film is consumed for every photographing; on the other hand, in this radiation image converting method, in which the radiographic image conversion panel is employed repeatedly, is also advantageous in terms of conservation of resources and overall economic efficiency.

The radiation image conversion panel employed in the radiation image recording and reproducing method basically contains a support and provided thereon, a stimulable phosphor layer, or merely a stimulable phosphor layer when the phosphor layer is self-standing. The stimulable phosphor layer contains a stimulable phosphor dispersed in a binder. There is also known a stimulable phosphor layer, which is formed by vacuum evaporation or a sintering process, free from a binder, and which contains an aggregated stimulable phosphor. There is further known a radiation image conversion panel in which a polymeric material is impregnated in the voids among the aggregated stimulable phosphor. On the surface of the stimulable phosphor layer opposite to the support side, normally provided is a protective layer which may be a polymer film or a vacuum evaporation film of an inorganic material.

The stimulable phosphor, after being exposed to radiation, produces stimulated emission upon exposure to the stimulating ray. In practical use, phosphors are employed, which exhibit an emission within a wavelength region of 300 to 500 nm stimulated by stimulating light of wavelengths of 400 to 900 nm. Examples of such stimulable phosphors include rare earth metal activated alkaline earth metal fluoride-halide phosphors described in Japanese Patent Application Publication Open to Public Inspection (hereinafter referred to as JP-A) Nos. 55-12145, 55-160078, 56-74175, 56-116777, 57-23673, 57-23675, 58-206678, 59-27289, 59-27980, 59-56479 and 59-56480; divalent europium activated alkaline earth metal fluoride-halide phosphors described in JP-A Nos. 59-75200, 6-84381, 60-106752, 60-166379, 60-221483, 60-228592, 60-228593, 61-23679, 61-120882, 61-120883, 61-120885, 61-235486 and 61-235487; rare earth element activated oxyhalide phosphors described in JP-A No. 59-12144; cerium activated trivalent metal oxyhalide phosphors described in JP-A No. 55-69281; bismuth activated alkaline metal halide phosphors described in JP-A No. 60-70484; divalent europium activated alkaline earth metal halophosphate phosphors described in JP-A Nos. 60-141783 and 60-157100; divalent europium activated alkaline earth metal haloborate phosphors described in JP-A No. 60-157099; divalent europium activated alkaline earth metal hydrogenated halide phosphors described in JP-A No. 60-217354; cerium activated rare earth complex halide phosphors described in JP-A Nos. 61-21173 and 61-21182; cerium activated rare earth halophosphate phosphors described in JP-A No. 61-40390; divalent europium activated cesium rubidium halide phosphors described in JP-A No. 60-78151; and divalent europium activated complex halide phosphors described in JP-A No. 60-78151. Specifically, iodide-containing divalent europium activated alkaline earth metal fluoride-halide phosphors, iodide containing rare earth metal activated oxyhalide phosphors and iodide-containing bismuth activated alkaline earth metal halide phosphors have been known, however, a stimulable phosphor exhibiting high luminance is still desired.

Along with the spread of the method to convert a radiation image employing a stimulable phosphor, further improvement in quality of the radiation image, such as sharpness and grainness, has come to be desired.

The foregoing preparation methods of stimulable phosphors are called as a solid phase process or a calcination method, in which pulverization after calcination is indispensable, however, there have been problems such that it was difficult to control the particle shape affecting sensitivity and image performance. Among the methods to improve the quality of the radiation image, effective are the methods to micronize the stimulable phosphor particles and to uniformize the diameter of the stimulable phosphor particles, namely, decreasing the particle diameter distribution.

The preparation method of a stimulable phosphor in the liquid phase, for example, disclosed in JP-A Nos. 7-233369 and 9-291278 is a method of obtaining a stimulable phosphor precursor in the form of fine particles by adjusting the concentration of a phosphor raw material solution, which is valid as a method of preparing stimulable phosphor powder having a narrow particle diameter distribution. Of rare earth activated alkaline earth metal fluorohalide stimulable phosphors, a phosphor having higher iodide content is preferred in terms of reduction of radiation exposure. This is due to the fact that iodine exhibits a higher X-ray absorption than bromine (refer to Patent Document 2).

However, as a result of investigation by the inventors, it was found that the stimulable phosphor having high iodine content may have problems that the moisture resistivity is not always satisfactory and degradation rate of the stimulable phosphor is relatively high, resulting in easy degradation of the luminance and image quality.

Technology for improving the image quality with paying attention to iodine has been known but any effect of improving the moisture resistivity has not been disclosed; cf. Patent Document 3 for example.

On the other hand, alkali-earth metal fluorohalide stimulable phosphor produced in liquid phase is advantageous in the luminance and graininess. However, the following problems are caused when the precursor is produced in the liquid phase. When the alkali fluorohalide stimulable phosphor particles are produced in the liquid phase, the following methods are effective, as described in JP-A Nos. 10-88125 and 9-291278: 1) barium iodide is dissolved in water or in an organic solvent and a solution of an inorganic fluorine compound is added to the above solution while stirring and 2) ammonium fluoride is dissolved in water and a solution of barium iodide is added while stirring. In the method 1), however, presence of excessive barium iodide in the solution is necessary. Therefore, stoichiometric ratio of charged barium iodide to barium fluoroiodide obtained after solid-liquid separation is often small as about 0.4. Namely, the yield of the alkali-earth metal fluoroiodide stimulable phosphor is often about 40%. In the method 2), excessive barium iodide is also necessary to the inorganic fluoride so that the yield is lowered. As above-mentioned, the synthesis of barium fluoroiodide in the liquid phase has the problem that the yield is low so that the production efficiency is lowered. Lowering of the barium iodide concentration in the mother liquid for raising the yield causes growing of the particles. The growing of the particles is not preferred concerning the image quality.

Trial for increasing the yield of rare-earth metal-activated alkali-earth metal fluorohalide stimulable phosphor, particularly alkali-earth fluoroiodide phosphor, is described in JP-A No. 11-29324 in which a method for obtaining a rare-earth element-containing angular barium fluoroiodide satisfying a basic composition of BaFI:xLn (Ln is a rare-earth element selected from the group consisting of Ce, Pr, Sm, Eu, Gd, Tm and Yb) by concentrating the reaction mother liquid after addition of a fluorine source- As a result of an additional test by the inventors, it was found that the method is not industrially realistic since the product efficiency is very low because the natural evaporation is used for condensation of the liquid, although angular BaFI crystals can be formed. Moreover, it was found that thus obtained crystals cannot be applied for practical use because the image quality, particularly the structural mottle is insufficient, due to the larger particle diameter of the angular crystals and the broader diameter distribution.

JP-A No. 2002-38143 discloses a method for obtaining a precursor with high production efficiency by concentrating the mother liquid having a higher concentration in advance. However, such the method is not preferable from the viewpoint of image quality since a large amount of BaF₂ as an intermediate exist at the begining of the concentration.
Patent Document 1: JP-A No. 55-12145
Patent Document 2: JP-A No. 2003-268369
Patent Document 3: JP-A No. 2001-19951

### DISCLOSURE OF THE INVENTION

### PROBLEMS TO BE SOLVED BY THE INVENTION

An object of the present invention is to provide a halide-containing stimulable phosphor exhibiting improved moisture resistance and luminance; a method of producing the same; a radiation image conversion panel employing the halide-containing stimulable phosphor, the radiation image conversion panel exhibiting improved moisture resistance and luminance as well as an improved image quality; and a method of producing the radiation image conversion panel.

Another object of the present invention is to provide a method of producing a halide-containing stimulable phosphor exhibiting a narrow particle diameter distribution, specifically, producing an oxygen introduced-rare earth activated alkaline earth metal fluorohalide stimulable phosphor, with a high productivity and with a high yield; and to provide a radiation image conversion panel produced by the foregoing method, which exhibits a high sensitivity and a high image quality.

### MEANS TO SOLVE THE PROBLEMS

The above object of the present invention is attained by the following structures.
1. A halide-containing stimulable phosphor comprising a halogen element, the halide-containing stimulable phosphor having different compositions of the halogen element between an outermost surface and an interior of the halide-containing stimulable phosphor.
2. The halide-containing stimulable phosphor of Item 1 comprising 3 or more halogen elements.
3. The halide-containing stimulable phosphor of Item 1 or 2, wherein, among halogen elements comprised in the outermost surface, a content of bromine is the largest.
4. The halide-containing stimulable phosphor of any one of Items 1 to 3, wherein the halide-containing stimulable phosphor is an oxygen introduced-rare earth activated alkaline earth metal fluorohalide stimulable phosphor represented by Formula (EFS1):
   Formula (EFS1)

   Interior: Ba₁₋ₓM²ₓFBr_{y}I_{1-y}:aM¹, bLn, cO

   Outermost Surface: Ba₁₋ₓM²ₓFBr₂I₁₋₂:aM¹, bLn, cO

   wherein M¹ is at least an alkali metal selected from the group consisting of Li, Na, K, Rb and Cs; M² is at least an alkaline earth metal selected from the group consisting of Be, Mg, Sr and Ca; Ln is at least one rare earth element selected from the group consisting of Ce, Pr, Sm, Eu, Gd, Tb, Tm, Dy, Ho, Nd, Er and Yb; and x, y, a, b and c are values meeting the following conditions:
   0≤x≤0.3, 0≤y≤0.3, 0,3≤z≤1.0, 0≤a≤0.05, 0≤b≤0.2 and 0≤c≤0.1.
5. A method of producing the halide-containing stimulable phosphor of any one of Items 1 to 4 comprising the steps of:
   producing a precursor of the stimulable phosphor; and
   surface treating the precursor of the stimulable phosphor.
6. A radiation image conversion panel comprising a support having thereon a stimulable phosphor layer comprising the halide-containing stimulable phosphor of any one of Items 1 to 4.
7. The radiation image conversion panel of Item 6, wherein
   a mass change of the radiation image conversion panel is 0.5 g or less, when the radiation image conversion panel is kept in a test chamber controlled at 40 °C ± 0.5 °C and a relative humidity of (90 ± 2) %RH for 24 hours.
8. A method of producing a radiation image conversion panel, wherein the halide-containing stimulable phosphor of any one of Items 1 to 4 is employed.
9. A method of producing a halide-containing stimulable phosphor precursor comprising:
   process A comprising the step of depositing crystals of halide-containing stimulable phosphor precursor from a mixed solution prepared by adding an inorganic material solution into a halide ion solution; and
   process B comprising the step of removing a solvent of the mixed solution from which the crystals are deposited from a vessel carrying the mixed solution.
10. The method of producing the halide-containing stimulable phosphor precursor of Item 9,
   wherein
   the halide ion solution contains bromine and barium; and
   the inorganic material solution is an inorganic fluoride solutuion.
11. The method of Item 9 or 10, wherein process A and process B are simultaneously carried out.
12. The method of any one of Items 9 to 11, wherein a duration of process A is longer than a duration of process B.
13. The method of any one of Items 9 to 12, wherein a method of removing the solvent contains a plurality of methods including a method of heating the mixed solution.
14. A halide-containing stimulable phosphor precursor produced by the method of any one of Items 9 to 13.
15. A method of producing a halide-containing stimulable phosphor employing the halide-containing stimulable phosphor precursor of Item 14.
16. The method of Item 15, wherein the halide-containing stimulable phosphor is a rare earth activated alkaline earth metal fluorohalide stimulable phosphor.
17. The method of Item 16, wherein the rare earth activated alkaline earth metal fluorohalide stimulable phosphor is an oxygen introduced-rare earth activated alkaline earth metal fluorohalide stimulable phosphor represented by Formula (4):

   Formula (4) Ba₁₋ₓM²ₓFX_{1-y}Br_{y}:aM², bLn, cO

   wherein M¹ is at least an alkali metal selected from the group consisting of Li, Na, K, Rb and Cs; X is at least a halogen element selected from the group consisting of Cl and I; M² is at least an alkaline earth metal selected from the group consisting of Be, Mg, Sr and Ca; Ln is at least one rare earth element selected from the group consisting of Ce, Pr, Sm, Eu, Gd, Tb, Tm, Dy, Ho, Nd, Er and Yb; and x, y, a, b and c are values meeting the following conditions:
   0≤x≤0.3, 0≤y≤1.0, 0≤a≤0.05, 0≤b≤0.2 and 0≤c≤0.1.
18. The method of Item 17, wherein y in Formula (4) is 1.
19. A halide-containing stimulable phosphor produced by the method of any one of Items 15 to 18.
20. A radiation image conversion panel comprising a stimulable phosphor layer comprising the halide-containing stimulable phosphor of Item 19.

### EFFECTS OF THE INVENTION

A halide-containing stimulable phosphor improved in moisture resistance and luminance and a production method thereof, and a radiation image conversion panel improved in the moisture resistance, luminance and image quality and a production method thereof using the phosphor can be provided by the present invention.

Moreover, a production method by which an oxygen-introduced-rare earth element activated alkali earth metal fluorohalide phosphor exhibiting a narrow diameter distribution can be obtained with high yield and a radiation image conversion panel having high sensitivity and high image quality (high luminance and high sharpness) can be provided by the present invention.

### BEST MODE TO CARRY OUT THE INVENTION

The present invention and the constitution components thereof are described in detail below.

### (Halide-containing stimulable phosphor)

The halide-containing stimulable phosphor of the present invention is characterized in that the composition of halide elements at the surface and interior of the halide-containing stimulable phosphor is varied by varying the composition of halogen elements at or near the outermost surface of the precursor crystals of various halide-containing stimulable phosphors by a physicochemical means.

"The variation in the composition" in the present invention means the variation in the content of at least one halogen element, which includes the variation in the kind of the halogen element and the variation in the content of the same halogen element.

The composition of the element constituting the halide-containing stimulable phosphor precursor (hereinafter referred to as stimulable phosphor precursor or merely as phosphor precursor) to be used for producing the halide-containing stimulable phosphor of the present invention can be varied according to the purpose of use, wavelength of stimulated emission and strength without any specific limitation. However, the halide-containing stimulable phosphor precursor preferably contains three or more kinds of halogen atoms. The halide-containing stimulable phosphor precursor represented by the following Basic Formula (I) is preferable.

Basic Formula (I): Ba₁₋ₓM²ₓX¹X²:aM¹,bLn

In the above, M¹ is at least one kind of alkali metal selected from the group consisting of Li, Na, K, Rb and Cs, M² is at least one kind of alkali-earth metal selected from the group consisting of Be, Mg, Sr and Ca, X¹, X² and X³ are each at least one kind of halogen element selected from the group consisting of F, Cl, Br and I, Ln is at least one kind of rare-earth element selected from the group consisting of Ce, Pr, Sm, Eu, Gd, Tb, Tm, Dy, Ho, Nd, Er and Yb, and x, y, a and b are each a value within the range of 0≤ x ≤ 0.5, 0 ≤ y < 0.5, 0 ≤ a ≤ 0.05 and 0 < b ≤ 0.2, respectively.

Moreover, a rare metal activated alkali- -earth metal fluorohalide stimulable phosphor precursor represented by the following Basic Formula (II) is preferable among the stimulable phosphor precursor represented by the above Basic Formula (I).

Basic Formula (II): Ba₁₋ₓM²ₓFX_{1-y}I_{y}:aM¹,bLn

In the above, M¹ is at least one kind of alkali metal selected from the group consisting of Li, Na, K, Rb and Cs, M² is at least one kind of alkali-earth metal selected from the group consisting of Be, Mg, Sr and Ca, X is at least one kind of halogen element selected from Cl and Br, Ln is at least one kind of rare-earth element selected fro the group consisting of Ce, Pr, Sm, Eu, Gd, Tb, Tm, Dy, Ho, Nd, Er and Yb, and x, y, a and b are each a value within the range of 0 ≤ x ≤ 0.5, 0 ≤ y < 0.5, 0 ≤ a ≤ 0.05 and 0 < b ≤ ≤ 0.2, respectively.

The phosphor precursor represented by the above Basic Formula (I) or (II) may contain the following various additional ingredients for improving the emitting light amount and the erasability. For example, a non-metallic element typified by B, O and S, an amphoteric element typified by A1, Ge and Sn, and a metallic element typified by Mg, Fe, Ni, Cu and Ag are applicable- The amount of such the additional component is preferably not more than 1,000 ppm based on the stimulable phosphor precursor represented by the Basic Formula (I).

Particularly preferable stimulable phosphor precursor is one formed by introducing oxygen to the stimulable phosphor precursor represented by the Basic Formula (I) or (II), which is an oxygen-introduced rare-earth metal-activated alkali-earth metal fluorohalide stimulable phosphor precursor represented by the following Basic Formula (III).

Basic Formula (III): Ba₁₋ₓM²ₓFX_{1-y}I_{y}, aM¹,bLn,cO

In the above, M¹ is at least one kind of alkali metal selected from the group consisting of Li, Na, K, Rb and Cs, M² is at least one kind of alkali-earth metal selected from the group consisting of Be, Mg, Sr and Ca, X is at least one kind of halogen element selected from Cl and Br, Ln is at least one kind of rare-earth element selected from the group consisting of Ce, Pr, Sm, Eu, Gd, Tb, Tm, Dy, Ho, Nd, Er and Yb, and x, y, a and b are each a value within the range of 0 ≤ x ≤ 0.5, 0 ≤ y < 0.5, 0 ≤ a ≤ 0.05, 0 < b ≤ 0.2, and 0 < c <0.1, respectively.

An aspect ratio of the stimulable phosphor precursor represented by the above Basic Formula (I), (II) or (III) is usually within the range of from 1.0 to 5.0. When the aspect ratio of the stimulable phosphor precursor to be used in the present invention is within the range of from 1.0 to 5.0, it is preferable that a median diameter (Dm) of the particle diameter is within the range of from 1 to 10 µm, more preferably from 2 to 7 µm and a ratio of σ/Dm is within the range of not more than 50%, more preferably not more than 40%, when σ is standard deviation of the particle diameter distribution. The shape of the particle includes cube, regular hexagonal, regular octahedral, intermediate polyhedral of them, and tetradecahedral, and the effects of the present invention can be attained by them as long as the particle aspect ratio, particle diameter and particle diameter distribution of them satisfy the above-mentioned. In the above Basic Formulas (I) to (III), Ln is preferably Ce or Eu for enhancing the light emission property (sensitivity, erasaility and response).

The above-described stimulable phosphor precursor can be produced by various conventional methods. For example, the methods disclosed in JP-A Nos. 2003-268369, 233369, 2001-19951 and 10-140148 are usable.

As preferable examples of the rare-earth metal-activated alkali-earth metal fluorohalide stimulable phosphor precursor, BaFI:0.005Eu, BaFI:0.001Eu, Ba_{0.97}Sr_{0.03}FI:00001K,0.013Eu, BaFI:0.0002K,0.005Eu, Ba_{0,998}Ca_{0.002}FT:0.005Eu, BaFI:0.005Ce, Ba_{0.99}Ca_{0.01}FI:0.0002K,0.005Eu, and BaFI:0.0001Ce,0.0001Tb are cited, but the phosphor precursor is not limited to the above-mentioned.

Production method of the stimulable phosphor precursor (precursor crystal) is described below.

Production method 1: BaI₂ and, according to necessity, a halide of M² and a halide of M¹ are added to an aqueous medium and sufficiently mixed for dissolving them to form a solution. The amount ratio of BaI₂ and the aqueous medium is previously controlled so as to make the concentration of BaI₂ to not less than 2N, preferably not less than 2.7N. On this occasion, small amount of acid, ammonia, alcohol, water-soluble polymer or water-insoluble metal oxide fine particle may be added if it is desired.

The solution is held at a temperature of not less than 50 °C and preferably not less than 80 °C. Then an aqueous solution of an inorganic fluoride (ammonium fluoride or an alkali metal fluoride) having a concentration of not less than 5N, preferably not less than 8N, is added to the above solution while stirring at the above temperature to obtain precipitation of rare-earth metal-activated alkali-earth metal fluoroiodide-type stimulable phosphor precursor crystals. The addition of the aqueous solution of the inorganic fluoride (ammonium fluoride or an alkali metal fluoride) is carried out by using a pipe with a pump. Time for adding a halide of Ln is not specifically limited, and the Ln halide may be previously added into the mother liquid, or may be added at the same time or after the addition of the inorganic halide. The halide of Ln may be mixed with the precipitation of the precursor crystals before calcination.

Production method 2: An aqueous solution containing an ammonium halide in a concentration of not less than 3N, preferably not less than 4N, and a halide of M² when x in the formula (I) is not 0, and further a halide of M¹ when y is not 0, is prepared.

The above solution is held at a temperature of not less than 50°C, preferably not less than 80 °C. Then a solution of the inorganic fluoride (ammonium fluoride or an alkali metal fluoride) having a concentration of not less than 5N, preferably not less than 8N and a solution of BaI₂ are continuously or intermittently added to the above solution while constantly maintaining the ratio of the former fluoride and the later Ba to obtain precipitation of the rare-earth metal-activated alkali-earth metal fluoroiodide type stimulable phosphor precursor. Crystals each having uniform element composition in the deepness direction can be obtained by maintaining the adding ratio of the fluorine and Ba or that of the fluorine, Ba and Ln at constant. The phosphor precursor without fluctuation in the properties can be obtained by calcinating the above crystals.

Time for adding a halide of Ln is not specifically limited, and the Ln halide may be previously added into the mother liquid, or may be added at the same time or after the addition of the inorganic fluoride and the aqueous solution of BaI₂. The halide of Ln may be mixed with the precipitation of the precursor crystals before calcination.

Then the phosphor precursor crystals are separated from the solution by filtration or centrifugation, sufficiently washed by methanol and dried.

It is preferable that the calcination is carried out while avoiding sintering for attaining uniform reduction of the activator. For avoiding the sintering, a sintering avoidance agent such as alumina fine particles and silica fine particles is added and mixed so as to uniformly adhere the sintering avoidance fine particles onto the surface of the crystals. The sintering avoidance agent can be eliminated when the sintering can be prevented by selecting the calcinating condition.

Next, the crystals of phosphor precursor are charged into a heat resistive vessel such as a quartz boat, alumina crucible and quartz crucible and the vessel is inserted into the center of an electric furnace for backing the crystals. A calcinating temperature of from 400 to 1,300°C is suitable and a temperature of from 500 to 1,000 °C is preferable. A calcinating time of from 0.5 to 12 hours is generally suitable though the time is varied depending on the charged amount of the mixture of raw materials of phosphor, calcinating temperature and temperature on the occasion of taking out from the furnace.

As the atmosphere for the calcination, a neutral atmosphere such as a nitrogen atmosphere and an argon atmosphere, a weak reduction atmosphere such as a nitrogen atmosphere containing a small amount of hydrogen, a carbon dioxide atmosphere containing carbon monoxide and an atmosphere slightly containing oxygen are applicable.

The particles (crystals) of stimulable phosphor precursor are preferably monodispersed, and those having a distribution (%) of average particle diameter of not more than 20%, particularly not more than 15%, are preferable. (Oxygen-introduced rare-earth metal-activated alkali-earth fluorohalide stimulable phosphor precursor)

Preparation of the oxygen-introduced rare-earth metal-activated alkali-earth fluorohalide stimulable phosphor precursor represented by the above formula (III) is preferably carried out by a liquid phase method by which the particle diameter can be easily controlled rather than a solid phase method by which the shape the particle can be difficultly controlled. Particularly, the stimulable phosphor precursor is preferably produced by the method according to the following liquid phase synthesizing example.

Raw material compounds other than the fluorine compound are dissolved by an aqueous medium. Namely, a solution is prepared by adding BaI₂ and halide of Ln, a halide of M² according to necessity, and a halide of M¹ into an aqueous medium and sufficiently mixing and dissolving. The amount ration of BaI₂ to the aqueous medium is previously controlled so that the BaI₂ concentration is made to not less than 3.3 mole/L and preferably not less than 3.5 mole/L. If the barium concentration is lower, particles having desired composition cannot be obtained or the particles are grown even though the desired composition can be obtained. Therefore, it is necessary to suitably select the concentration of barium. As a result of investigation by the inventors, it is found that fine particles of the precursor can be formed when the concentration is not less than 3.3 mole/L. On such the occasion, small amount of acid, ammonia, alcohol, a water-soluble polymer, a fine powder of water-insoluble metal oxide may be added if it is desired. Addition of suitable amount of lower alcohol (methanol or ethanol) within the range in which the solubility of BaI₂ is not considerably lowered is preferable embodiment. Thus obtained solution (reaction mother liquid) is kept at 80 °C.

A solution of inorganic fluoride such as ammonium fluoride and an alkali metal fluoride is poured into the above aqueous solution while kept at 80 °C and stirring. The pouring is preferably performed at a portion where the mother liquid is vigorously stirred. Crystals of the oxygen-introduced rare-earth metal-activated alkali-earth fluorohalide stimulable phosphor precursor represented by the foregoing formula (III) are precipitated.

In the present invention, it is preferred to remove the solvent from the reacting liquid on the occasion of the addition of the inorganic fluoride solution. The period of the removing of the solvent is not specifically limited as long as during the addition. The ratio of the total weight after the removal of solvent to that of before the removal (the sum of the weight of the reacting mother liquid and that of the added solution) is preferably not more than 0.97. When the ratio is less than the above, the crystal is not completely converted to BaFI sometimes. The ratio is preferably not more than 0.97 and more preferably not more than 0.95. When the solvent is excessively removed, inconvenience on handling is caused sometimes by excessively raising in the viscosity.

Accordingly, the preferable solvent removal ratio is 0.5 or more. Further, since a time period required for solvent removal greatly affects the productivity of the stimulable phosphor and the solvent removing method will affect the shape and diameter distribution of resulting particles, an adequate solvent removing method must be selected. A general method of removing a solvent from an aqueous solution is heating the solution to evaporate the solvent. This method is also available to the present invention. The solvent removal facilitates preparation of a phosphor precursor of expected compositions. It is preferable to use the other solvent removing method to increase the productivity and to shape particles adequately. In this case, any solvent and method can be used. It is also possible to use a method of using a separation membrane such as a reverse osmosis membrane. Judging from the productivity, the present invention preferably uses a solvent removing method below.
1. Dry gas aeration
   In a closed reaction vessel, at least two openings are provided, through which dry gas is allowed to pass. Any gas is optionally selected but common air or nitrogen is preferred in terms of safety. The solvent is removed concomitantly with the aerating gas, depending on the saturated water vapor content in the gas. Besides permeating through openings in the reaction vessel, it is useful to allow the gas to bubble through a liquid phase to cause the solvent to be absorbed into the bubbles.
2. Evacuation
   As is well known, vapor pressure is lowered by evacuation. Thus, a solvent is efficiently removed under reduced pressure. The extent of the reduced pressure is optimally selected, depending on the kind of solvent. In cases where water is used as a solvent, for example, the reduced pressure is preferably at most 86 kPa.
3. Liquid membrane
   Removal of a solvent can be efficiently effected by enlarging the vaporization area. In cases when undergoing reaction by heating with stirring in a reaction vessel of a given volume, heating is generally done in such a manner that a heating means is immersed into the liquid or is provided outside the vessel. In this case, the heat transfer area is limited to the portion of the heating means in contact with the liquid, so that the heat transfer area decreases with removal of the solvent, retarding removal of the solvent. To prevent such retardation, using a pump or a stirrer, the reaction solution is sprayed onto the wall of the reaction vessel to increase the heat transfer area. This method of spraying liquid onto the wall of the reaction vessel to form a liquid membrane is known as a wetted wall method. The wetted wall can be formed not only using a pump but also using a stirrer described in JP-A Nos. 6-335627 and 11-235522.

These methods are employed alone or in combination. Examples thereof include the combination of the formation of the wetted wall and maintaining the reaction vessel under the reduced pressure and the combination of the formation of the wetted wall and dry gas aeration. Of these, the former is preferred, as described in JP-A No. 6-335627 and Japanese Patent Application No. 2002-35202.

The resulting crystals of the phosphor precursor are separated from the solution through filtration or centrifugation, washed sufficiently with liquid such as methanol and then dried. To the dried crystals of the phosphor precursor is added an anti-sintering agent such as fine alumina powder or fine silica powder, which adheres to the surface of the crystals. It is possible to save addition of the anti-sintering agent by selecting the calcination conditions.

Then, this method puts the phosphor precursor crystals in a heat-resistant vessel such as a quartz boat, alumina crucible, or quartz crucible, puts the heat-resistant vessel in the center of an electric furnace, and calcinates the phosphor precursor crystals without sintering. The calcinating temperature should preferably 400 - 1,300 °C and more preferably 500 - 1,000 °C. The calcinating time is dependent upon the quantity of the phosphor precursor crystals in the boat or crucible, the calcinating temperature, and take-up temperature, but it is preferably 0.5 - 12 hours.

As the atmosphere for the calcination, a neutral atmosphere such as a nitrogen atmosphere and an argon atmosphere, a weak reduction atmosphere such as nitrogen atmosphere containing a small amount of hydrogen and a carbon dioxide atmosphere containing carbon monoxide or an atmosphere slightly containing oxygen is applied. The method described in JP-A No. 2000-8034 is preferably applied for the calcination. The objective oxygen-introduced rare-earth metal-activated alkali-earth fluorohalide stimulable phosphor precursor is obtained by the calcination.

The oxygen-introduced rare-earth metal-activated alkali-earth fluorohalide stimulable phosphor precursor is formed by introducing oxygen on the occasion of the calcination as above-mentioned. By such the treatment, particularly high luminance can be obtained. In detail, the calcination is preferably performed according to the following procedure.

Before the calcination, the stimulable phosphor precursor is charged into the stimulable phosphor precursor charging portion in the center tube of a furnace so that the ratio of the total weight of the stimulable phosphor precursor m (kg) to the inner volume of the center tube of furnace 1 (L), m/l (kg/L) is made to within the range of from 0.03 to 1.0. Thereafter, an atmosphere gas composed of nitrogen containing from 0.1 to 10% of hydrogen is passed through the furnace tube. On this occasion, it is preferable that the temperature at the stimulable phosphor precursor charging portion is preferably kept at not more than 100% until at least 10% of the inner volume of the furnace tube of the atmosphere gas is injected- After replacing the atmosphere in the furnace tube by the above atmosphere gas, the temperature is raised by 600 °C or more. On this occasion, the mixed atmosphere in the furnace tube is preferably passed at a flowing rate to the volume of the furnace tube of from 0.01 to 2.0 (%/min), and more preferably from 0.1 to 3.0 (%/min). The rising rate of the temperature is preferably from 1 to 50 °C/min though the temperature is varied according to the specification of the electric furnace.

After arrival of the temperature at 600°C, an atmosphere gas composed of from 0.1 to 7% of oxygen, from 0.1 to 10% of hydrogen and the remaining part of nitrogen is introduced into the furnace tube and the mixed atmosphere gas composed of nitrogen, hydrogen and oxygen is passed at 600 °C at least for 30 minutes, and preferably 1 to 5 hours. The flowing amount is preferably from 0.01 to 2.0 (%/min) in the ratio of the flowing amount to the volume of the furnace tube. The flowing amount is more preferably from 0.1 to 3.0 (%/min). The temperature on this occasion is preferably from 600 to 1,300 °C and more preferably from 700 to 1,000 °C. Sufficient photostimulation light emitting ability can be obtained by making the temperature to 600 °C or more, and photostimulation light emitting ability suitable for practical diagnosis on the radiation image can be obtained by making the temperature to 700 °C or more. The formation of coarse particles by sintering can be prevented when the temperature is not more than 1,300 °C. Particularly, the stimulable phosphor having a particle diameter suitable for practical diagnosis on the radiation image can be obtained when the temperature is not more than 1,000 °C. The temperature is further preferably about 820 °C. As the atmosphere to be newly introduced, a mixed gas having a hydrogen concentration of from 0.1 to 10%, an oxygen concentration of less than 7% and that of the hydrogen and the remaining part of nitrogen is preferable. A mixed gas having a hydrogen concentration of from 0.1 to 3%, an oxygen concentration of from 40 to 150% of the hydrogen and the remaining part of nitrogen is more preferable. A mixed gas composed of 1% of hydrogen, 1.1% of oxygen and the remaining part of is particularly preferred. Reducing force can be obtained by making the hydrogen concentration to 0.1% or more so that the light emission property, and handling suitability are improved and reduction of the crystal of the stimulable phosphor precursor it self can be prevented by making the hydrogen concentration to 5% or less. The presence of oxygen considerably improves the photostimulation light emission and the peak of such the effect is at a concentration of about 11% of the hydrogen concentration.

After the above operation, the atmosphere composed of 0.1 to 10% of hydrogen and the remaining part of nitrogen is introduced again into the furnace tube. On this occasion, the atmosphere gas the same as that used for temperature rising period is preferably used. The flowing amount of the atmosphere gas in the flowing rate to the furnace tube volume of from 0.01 to 10 (%/min) is preferable. Reaction products formed in the furnace tube other than the stimulable phosphor precursor can be exhausted since the atmosphere in the furnace tube is replaced by the above gas. The gas composed of from 0.1 to 10% of hydrogen and the remaining part of nitrogen is held at least 30 minutes, preferably from 30 minutes to 12 hours, at 600 °C or more. The stimulable phosphor precursor for a stimulable phosphor having high stimulated emission ability can be obtained by making the above keeping time to 30 minutes or more. The lowering of the stimulation light emission ability by heating can be prevented by making the keeping time to 12 hours or less. The temperature at such period is preferably from 600 to 1,300 °C and more preferably from 700 to 1,000 °C.

Cooling is preferably performed while passing the atmosphere gas composed of from 0.1 to 10% of hydrogen and the remaining part of nitrogen in a flowing rate based on the volume of the furnace tube of from 2.0 to 10 (%/min). The flow rate of the atmosphere gas is preferably increased for raising the replacing efficiency. The reaction products other than the stimulable phosphor formed in the furnace tube can be exhausted by making the flow rate to 2.0 to 10 (%/min). The temperature lowering rate is preferably from 1 to 50 °C/min.

The cooling is preferably performed as fast as possible from the viewpoint of raising the production efficiency and the fluorescent property. The production apparatus relating to the present invention is advantageous since the cooling rate can be made very high by separation of the calcinating furnace. It is preferable that the cooling is carried out until at least 100 °C and then takes out the produced phosphor, and particularly preferable taking out temperature is 50 °C or less.

In the present invention, degradation by corrosion and contamination can be prevented by fast cooling of the phosphor after uniformly calcinating the stimulable phosphor precursor.

### (Control of halogen element composition (kind and content) at the outermost surface of phosphor)

The halogen element composition of the outermost surface can be varied from that of the interior by a surface treatment such as immersing the above prepared stimulable phosphor precursor represented by the Basic Formula (I), (II) or (III) into a solution of a halide compound having a designated concentration.

The producing method of halide-containing stimulable phosphor precursor relating to the present invention includes the step for producing the stimulable phosphor precursor and the step for treating the surface of the stimulable phosphor precursor for varying the halogen element composition of the outermost surface from the that of the interior of the precursor.

The surface treatment relating to the present invention is a treatment by a treating liquid containing halogen element. It is preferable for producing the halide-containing stimulable phosphor of the present invention that the stimulable phosphor precursor is calcinated after the surface treatment.

When once calcinated stimulable phosphor is used, the backing can be omitted. As an example of the surface treatment, the following treatment can be cited; the foregoing stimulable phosphor precursor crystal particles (BFI powder) are put into a solution composed of ethanol and an 46% aqueous solution of HBr in a ratio of 98.5:1.5 and stirred for 15 minutes, and then filtered and washed to raise the Br content at the crystal surface.

Particularly preferable embodiment from the viewpoint of the moisture resistance and the luminance among the halide-containing stimulable phosphors relating to the present invention is the oxygen-introduced rare-earth metal-activated stimulable phosphor represented by the following Formula EFS1 which is characterized in that the halogen element composition, among the elements composition constituting the outermost surface and the interior, at the outermost surface is different from that at the interior and the halogen element having largest content among the halogen elements constituting the outermost surface of the phosphor is bromine element.

### Formula (EFS1)

Interior: Ba₁₋ₓM²ₓFBr_{y}I_{1-y}:aM¹,bLn,cO

Outermost surface: Ba₁₋ₓM²ₓFBr_{z}I_{1-z}:aM¹,bLn,cO

In the above formula, M¹ is at least one kind of alkali metal selected from the group consisting of Li, Na, K, Rb and Cs, M² is at least one kind of alkali-earth metal selected from the group consisting of Be, Mg, Sr and Ca, Ln is at least one kind of rare-earth element selected fro the group consisting of Ce, Pr, Sm, Eu, Gd, Tb, Tm, Dy, Ho, Nd, Er and Yb, and x, y, a, b and c are each a value within the range of 0 ≤ x ≤ 0.3, 0 < y ≤ 0.3, 0.3 < z ≤ 1.0, 0 ≤ a ≤ 0.05, 0 < b ≤ 0.2 and 0 < c ≤ 0.1, respectively.

The halogen composition of the crystal surface of the halide-containing stimulable phosphor or the halide-containing stimulable phosphor precursor can be analyzed by various known surface analysis methods.

For example, when a microuger electron spectroscopic apparatus is used, the electric current passing portion is successively dug down from the outermost surface using a sputtering gun attached with the apparatus, and the element analysis can be carried out based on the auger electron spectrum obtained by the auger electron spectroscopy at each of surfaces different from each other in the deepness-Furthermore, the shape of the analyzed portion can be observed by the attached electron microscope together with the composition analysis.

In the present invention, the "outermost surface" of the halide-containing stimulable phosphor means the region of from the surface to the portion at a deepness of 75 nm and the "interior" is a portion at a deepness of more than 75 nm.

In the present invention, it is preferable that the halide-containing stimulable phosphor contains bromine as the halogen element and the content of Br shows the highest peak in the auger electron spectrum at a portion being within 75 nm from the surface, namely the maximum value of the Br content is larger than the content of the other halogen elements.

### (Production of a radiological image conversion panel) [Support]

The radiation image conversion panel uses various kinds of polymer materials for its support. Particularly the materials are preferable if they can be processed into flexible sheet or web that can be used as information recording material. Judging from this, preferable films are cellulose acetate, polyester, polyethylene terephthalate, polyethylene naphthalate, polyamide, polyimide, triacetate, and polycarbonate films.

The thickness of the support layer is dependent upon the material of the support but generally it is 80 - 1,000 µm and more preferably 80 - 500 µm for convenience in handling. The surface of the support can be smooth or matted to increase the adhesion of the support to the stimulable phosphor layer.

The support may have an undercoat layer to increase the adhesion between the support and the stimulable phosphor layer.

### [Under court layer]

The undercoat layer of the present invention should preferably contain a crosslinkable polymer resin and its crosslinking agent.

Any polymer resin can be used for the undercoat layer. It can be, for example, polyurethane, polyester, vinyl chloride copolymer, vinyl chloride-vinyl acetate copolymer, vinyl chloride-vinylidene chloride copolymer, vinyl chloride acrylonitrile copolymer, butadiene-acrylonitrile copolymer, polyamide resin, polyvinyl butyral, cellulose derivative (such as nitrocellulose), styrene-butadiene copolymer, a variety of synthetic rubber resins, phenol resin, epoxy resin, urea resin, melamine resin, phenoxy resin, silicone resin, acrylic resin, urea formamide resin, and so on. Among them, polyurethane, polyester, vinyl chloride copolymer, polyvinyl butyral, and nitro-cellulose are preferable. Further, the mean glass transition temperature (Tg) of polymer resin for the undercoat should be at least 25 °C and more preferably 25 - 200 °C.

The crosslinking agent usable in the present invention for the undercoat layer can be any crosslinking agent. It can be, for example, multifunctional isocyanate and its derivative, melamine and its derivative, amino resin and its derivative, and so on. Among them, multifunctional isocyanate compounds are preferable as the crosslinking agent. Commercially available multifunctional isocyanate compounds are, for example, CORONATE HX and CORONATE 3041 produced by Nippon Polyurethane Industry Co. Ltd.

The undercoat layer can be formed on the support by the following method, for example.

First, this method prepares an undercoat layer coating liquid by adding a polymer resin and a crosslinking agent which are selected from the above to an adequate solvent, for example, a solvent which is used for preparation of a phosphor layer coating liquid (to be explained later) and fully mixing thereof.

The quantity of the crosslinking agent to be used is dependent upon the characteristics of a target radiation image conversion panel, raw materials for stimulable phosphor layers and the supports, and polymer resins for undercoat layers. To assure the adhesion of the stimulable phosphor layer to the support, the weight of the crosslinking agent should be at most 50% and preferably 15 - 50% by weight of the polymer resin.

The thickness of the undercoat layer is dependent upon the characteristics of a target radiation image conversion panel, raw materials for stimulable phosphor layers and the supports, and polymer resins for undercoat layers.
Generally, the thickness should preferably be 3 - 50 µm and more preferably 5 - 40 µm.

### [Stimulable phosphor layer]

Typical binders for the phosphor layer in the present invention are, for example, proteins such as gelatine, polysaccharide such as dextran, or natural polymer substances such as gum Arabic; and synthetic polymer substances such as polyvinyl butyral, polyvinyl acetate, nitrocellulose, ethylcellulose, vinylidenechloride-vinyl chloride copolymer, polyalkyl(meth)acrylate, vinyl chloride-vinylacetate copolymer, polyurethane, cellulose acetate butylate, polyvinyl alcohol, and linear polyester. However, it is preferable that the binder is a resin which contains thermoplastic elastomer as a main ingredient. Such thermoplastic elastomers are, for example, polystyrene-related, polyolefin-related thermoplastic elastomer, polyurethane-related thermoplastic elastomer, polyester-related thermoplastic elastomer, polyamide-related thermoplastic elastomer, polybutadiene-related thermoplastic elastomer, ethylene vinyl acetate related thermoplastic elastomer, polyvinyl chloride related thermoplastic elastomer, natural rubber related thermoplastic elastomer, fluorine rubber related thermoplastic elastomer, polyisoprene-related thermoplastic elastomer, chlorinated polyethylene related thermoplastic elastomer, styrene-butadiene rubber thermoplastic elastomer and silicone rubber related thermoplastic elastomer. Among the above thermoplastic elastomers, polyurethane-thermoplastic elastomer and polyester-related thermoplastic elastomer are preferable because they have a strong bonding force with phosphor, a good dispersibility, and a good ductility. They are preferable because they can increase the bendng resistance of the sensitizing screen. Here, these binders may be cross-linked by proper crosslinking agents.

The mixing ratio of the binder and the stimulable phosphor in the coating liquid is dependent upon the haze ratio setting of the radiation image conversion panel, but preferably the binder should be 1 - 20 parts by weight and more preferably 2 - 10 parts by weight of the stimulable phosphor.

The radiation image conversion panel having a coated phosphor layer can be coated with a film for protection. Such films can be polyester, polymethacrylate, nitrocellulose film, and cellulose acetate films, each of which has an excitation-light absorption layer whose haze ratio is at least 5% and less than 60% measured by a method defined in ASTMD-1003. Drawn polyethylene terephthalate films and polyethylene naphthalate films are preferable as such protective films judging from film transparency and strength. Further, judging from moisture-proofing, the above films should preferably be coated with a metal oxide or silicon nitride film by vacuum evaporation.

The haze ratio of a film to be used for the protective layer can be easily controlled by the haze ratio of a resin film to be used. Industrial resin films of arbitrary haze ratios can be easily obtained. Usually, the protective film for the radiation image conversion panel must be optically very transparent. The haze ratio of the film is preferably 5% or more and less than 60% and more preferably 10% or more and less than 50%.

The film usable for the protective layer can have an optimum moisture-proof property by laminating a plurality of resin films or deposited films on which metal oxide or the like is vapor-deposited according to the required moisture-proofing. To prevent deterioration of the stimulable phosphor by moisture absorption, the water vapor permeability of the protective film should be at most 5.0 g/m² a day. The resin film can be laminated by any known laminating method.

It is preferable to provide an excited-light absorbing layer between the laminated resin films in order to protect the phosphor plate against physical impacts and chemical deterioration. With this, the phosphor plate can keep its performance steadily for a long time. A plurality of excited-light absorbing layers can be provided. Further, a colored adhesive layer to laminate resin films can be used instead of the excited-light absorbing layer.

The protective film can be bonded to the stimulable phosphor layer by means of an adhesive layer. However, it is more preferable that the protective film is provided to cover and seal the phosphor surface. (This structure is also called a sealing structure.) The phosphor plate can be sealed by any known method. It is preferable to use a moisture-proof protective film whose outermost resin layer to be contact with the phosphor plate is made of a heat-sealingresin film. This facilitates sealing of the protective film to the phosphor plate and can increase the sealing efficiency. This is one of the preferred embodiments of the present invention. Further, it is preferable to sandwich the phosphor sheet between two moisture-proof protective films and heat-seal the protective film edges that run off the edges of the phosphor sheet by an impulse sealer or the like. This can prevent invasion of water into the phosphor sheet from its edges. Further it is preferable to use a laminated moisture-proof film containing one or more aluminum films instead of a moisture-proof protective film facing to the support surface. This aluminum-laminated film can completely prevent water invasion and facilitate sealing works. Furthermore, it is preferable to seal the protective films by the impulse sealer in a vacuum environment because this can prevent displacement of the phosphor sheet in the envelope of the protective films and exclude moisture from inside the envelope.

The outermost heat-sealing resin layer of the moisture-proof protective film which faces to the phosphor surface need not be bonded to the phosphor surface. "Not bonded to the phosphor surface" means that the phosphor surface is assumed to be optically and mechanically discontinuous to the moisture-proof protective film even when the phosphor surface is microscopically in point-contact with the protective film. Here, the above heat-sealing resin films indicate resin films that can be heat-sealed by a general-purpose impulse sealer. They can be, for example, ethylene vinyl acetate copolymer (EVA), polypropylene (PP), and polyethylene (PE) films.

Organic solvents usable for preparation of the phosphor layer coating liquid for forming the stimulable phosphor layer can be, for example, lower alcohols such as methanol, ethanol, isopropanol, and n-butanol; ketones such as acetone, methylethyl ketone, methyl isobutyl ketone, and cyclohexanon; esters of lower alcohol and lower fatty acid such as methyl acetate, ethyl acetate, and n-butyl acetate; ethers such as dioxane, ethylene glycol monoethyl ether, and ethylene glycol monomethyl ether; aromatic compounds such as triol and xylol; halogenated hydrocarbons such as methylene chloride and ethylene chloride; and their mixtures.

The coating liquid for the stimulable phosphor layer may contain various additives such as a dispersing agent to improve the dispersibility of particles in the coating liquid and a plasticizer to increase the binding force between the binder and phosphor particles in the prepared stimulable phosphor layer. Such dispersing agents can be, for example, phthalic acid, stearic acid, caproic acid, and oleophilic surfactant. Such plasticizers can be, for example, phosphate esters such as triphenyl phosphate, tricresyl phosphate, and diphenyl phosphate; ester phthalates such as diethyl phthalate and dimethoxy ethyl phthalate; glycolate esters such as ethyl phthalyl ethyl glycolate and butyl phthalyl butyl glycolate; and polyesters of polyethylene glycol and aliphatic dibasic acid such as polyester of triethylene glycol and adipic acid and polyester of diethylene glycol and succinic acid. Further, the stimulable phosphor layer coating liquid can contain a dispersing agent such as stearic acid, phthalic acid, caproic acid, and oleophilic surfactant to improve the dispersibility of stimulable phosphor particles.

A dispersing device such as a ball mill, bead mill, sand mill, atraiter, 3-roll mill, high-speed impeller disperser, Kady mill, ultrasonic disperser is used to prepare a coating liquid for the stimulable phosphor layer.

The coating liquid for the stimulable phosphor layer prepared by the above disperser is evenly applied to the surface of the support (to be explained later). A coating method can be a normal coating means such as Doctor Blade, roll coater, knife coater, comma coater, and lip coater.

The liquid layer coated onto the support by the above means is heated and dried. This is the stimulable phosphor layer formed on the support. The thickness of the stimulable phosphor layer is dependent upon the property of the target radiation image conversion panel, kind of the stimulable phosphor, mixing ratio of binder and phosphor, and so on. However, the layer thickness is usually 10 - 1,000 µm and preferably 10 - 500 µm.

Above Items 9-20 will be described below.

### (Halide-containing stimulable phosphor)

The halide-containing stimulable phosphor of the present invention is characterized in that the phosphor is obtained by a new production method. Namely, the precursor crystal of the stimulable phosphor is obtained, in the production method explained in full detail later, according to the following steps;
(i) process A: depositing a halide-containing stimulable phosphor precursor crystal from a mixed solution obtained by adding a solution containing an inorganic substance to a solution containing a halide ion; and (ii) process B: removing the solvent from the container carrying the mixed solution, for the deposition of the crystal.

Here, the stimulable phosphor precursor crystal of the present invention means a crystal which is deposited from the mixed solution in the above-mentioned production method, but not calcinated at 600 °C or more yet. The stimulable phosphor precursor crystal hardly exhibits a stimulated luminescence nor an instant luminescence.

The compositions of the elements constituting the stimulable phosphor precursor crystal of the present invention may be varied according to the application purpose, or to the wavelength or intensity of excitation light, and is not limited to a specific composition. However, the halide-containing stimulable phosphor precursor represented by the following Basic Formula (1) is preferable.

Basic Formula (1) : Ba₁₋ₓM²ₓX¹X²_{1-y}X³_{y}:aM¹,bLn wherein M¹ is at least an alkali metal selected from the group consisting of Li, Na, K, Rb and Cs; M² is at least one alkaline earth metal selected from the group consisting of Be, Mg, Sr and Ca; X1,X2,X3 each are at least one halogen element selected from the group consisting of F, Cl, Br and I; Ln is at least one rare earth element selected from the group consisting of Ce, Pr, Sm, Eu, Gd, Tb, Tm, Dy, Ho, Nd, Er and Yb; and x, y, a and b are values meeting the following conditions:
0≤x≤0.5, 0≤y≤1.0, 0≤a≤0.05 and 0<b≤0.2.

Further, among the halide-containing stimulable phosphor precursors represented by above Basic Formula (1), preferable is an oxygen introduced-rare earth activated alkaline earth metal fluorohalide stimulable phosphor precursor represented by following Basic Formula (2).

Basic Formula (2): Ba₁₋ₓM²ₓFX_{1-y}I_{y}:aM¹,bLn

wherein M¹ is at least an alkali metal selected from the group consisting of Li, Na, K, Rb and Cs; M² is at least one alkaline earth metal selected from the group consisting of Be, Mg, Sr and Ca; X is at least one halogen element selected from the group consisting of Cl and Br; Ln is at least one rare earth element selected from the group consisting of Ce, Pr, Sm, Eu, Gd, Tb, Tm, Dy, Ho, Nd, Er and Yb; and x, y, a and b are values meeting the following conditions:
0≤x≤0.5, 0≤y≤1.0, 0≤a≤0,05 and 0<b≤0.2.

The stimulable phosphor precursor represented by Basic Formula (1) or (2) may contain the following variety of additional components, in order to further improve the amount of stimulated emission and the image erasing property. For example, the nonmetallic element such as B, O, and S; the amphoteric element such as Al, Ge and Sn; and the metallic element such as Mg, Fe, Ni, Cu and Ag; are cited. The amount of the additive components is preferably 1000 ppm or less based on the amount of the stimulable phosphore represented by Basic Formula (1).

The halide-containing stimulable phosphor of the present invention is preferably a stimulable phosphor in which oxygen is introduced in the stimulable phosphor represented by Basic Formula (1) or (2), which is an oxygen introduced-raxe earth activated alkaline earth metal fluorohalide stimulable phosphor represented by Basic Formula (3).

Basic Formula (3): Ba₁₋ₓM²ₓFX_{1-y}Br_{y}:aM¹,bLn,cO

wherein M¹ is at least an alkali metal selected from the group consisting of Li, Na, K, Rb and Cs; M² is at least one alkaline earth metal selected from the group consisting of Be, Mg, Sr and Ca; X is at least one halogen element selected from the group consisting of Cl and I; Ln is at least one rare earth element selected from the group consisting of Ce, Pr, Sm, Eu, Gd, Tb, Tm, Dy, Ho, Nd, Er and Yb; and x, y, a and b are values meeting the following conditions:
0≤x≤0.5, 0≤y≤1.0, 0≤a≤0.05 and 0<b≤0.2, 0<c≤0.1.

In the present invention, the most preferable halide-containing stimulable phosphor is an oxygen introduced-rare earth activated alkaline earth metal fluorohalide stimulable phosphor represented by Formula (4).

Formula (4): Ba₁₋ₓM²ₓFX_{1-y}Br_{y}:aM¹,bLn,cO

wherein M¹ is at least an alkali metal selected from the group consisting of Li, Na, K, Rb and Cs; X is at least one halogen element selected from the group consisting of Cl and I; M² is at least one alkaline earth metal selected from the group consisting of Be, Mg, Sr and Ca; Ln is at least one rare earth element selected from the group consisting of Ce, Pr, Sm, Eu, Gd, Tb, Tm, Dy, Ho, Nd, Er and Yb; and x, y, a, b and c are values meeting the following conditions:
0≤x≤0.3, 0≤y≤1.0, 0≤a≤0.05, 0<b≤0.2, 0<c≤0.1. The stimulable phosphor precursor and the stimulable phosphor represented by Basic Formula (1) - (3) usually have an aspect ratio of 1.0 - 5.0. When the aspect ratio of the stimulable phosphor of the present invention is 1.0 - 2.0, the medial diameter (Dm) of the particles is preferably 1 - 10 µm (further preferably 2 - 7 µm) and σ/Dm is 50 % or less (further preferably 40 % or less), wherein σ represents the standard deviation of the particle diameter distribution. On the other hand, when the aspect ratio of the stimulable phosphor of the present invention is 2.0 - 5.0, the medial diameter (Dm) of the particles is preferably 1 - 20 nm (further preferably 2 15 µm) and (σ/Dm is 50 % or less (further preferably 40 % or less), wherein σ represents the standard deviation of the particle diameter distribution. As a particle shape, a rectangular parallelepiped type, a cube type, an octahedron type and an intermediate polyhedron type thereof are available, and the effect of the present invention can be obtained when the abovementioned conditions for the aspect ratio, the median diameter and the particle diameter distribution are fulfilled. In Basic Formulas (1) - (3), Ln is preferably Ce or Eu with respect to the emission properties (sensitivity, image easing property, and responsiveness).

Preferable examples of a rare earth activated alkaline earth metal fluorohalide stimulable phosphor crystal as a halide-containing stimulable phosphor of the present invention include: BaFI:0.005Eu; BaFI:0.001Eu; Ba_{0.97}Sr_{0.03}FI:0.0001K,0.013Eu; BaFI:0.0002K,0.005Eu; Ba_{0.998}Ca_{0.002}FI:0.005Eu;
BaFI:_{0.005}Ce, Ba_{0.99}Ca_{0.01}FI:0.0002K,0.005Eu; and
BaFI:0.0001Ce,0.0001Tb, however the present invention is not limited thereto.
It is not limited to these.

### (Production method of precursor crystal and stimulable phosphor)

The halide-containing stimulable phosphor precursor of the present invention is characterized in that, as will be described later in detail, it is produced by a method comprising:
process A comprising the step of depositing crystals of halide-containing stimulable phosphor precursor from a mixed solution prepared by adding an inorganic material solution into a halide ion solution; and
process B comprising the step of removing a solvent of the mixed solution from which the crystals are deposited from a vessel carrying the mixed solution. With respect to the production of a stimulable phosphor precursor of the present invention via a liquid phase method, a method of producing a precursor disclosed in JP-A No. 10-140148 and an apparatus for producing a precursor disclosed in JP-A No. 10-147778 can be referred to.

The details of the production method of the stimulable phosphor of the present invention will be described below.

The halide ion solution of the present invention is a solution in which a compound containing a halogen contained in the halide-containing stimulable phosphor is dissolved, and a halogen ion is contained. As a compound containing the halogen, barium halide or a halide of a rare earth metal, contained in the halide-containing stimulable phosphor. As the halogen, bromine is preferably employed. And, as an inorganic material solution, an inorganic fluoride solution is preferably employed.

First, the raw material compounds excluding the fluoride compound are dissolved in an aqueous medium. Namely, BaBr₂, a halide of Ln (at least a rare earth element selected from the group consisting of Ce, Pr, Sm, Eu, Gd, Tb, Tm, Dy, Ho, Nd, Er and Yb), a halide of M² if necessary, and a halide of M¹ are fully mixed and dissolved in an aqueous medium. Here, it is necessary to control the quantitative ratio of BaBr₂ and the quantity of the aqueous medium in advance so that the concentration of BaBr₂ is 0.5 moles/liter or more and preferably 2.5 moles/liter or more. The concentration of barium is necessary to be adequately selected, and it is preferably 0.5 moles/liter or more in order to obtain minute precursor particles. In this case, a small amount of, for example, ammonia, alcohol, a water-soluble polymer or water-insoluble metal oxide powder may be added if desired. It is also a preferable embodiment that an adequate amount of a lower alcohol (methanol or ethanol) is added in the solution within the range in which the solubility of BaBr₂ is not drastically decreased. The aqueous solution (reaction mother liquid) is maintained at a temperature of 60 °C.

Next, an inorganic material solution is added into the halide solution. As the inorganic material solution, an inorganic fluoride is preferably used. Into the abovementioned aqueous solution (reaction mother liquid) maintained at 60 °C and being stirred, an aqueous solution of an inorganic fluoride (for example, ammonium fluoride or a fluoride of an alkali metal) is added. The solution is preferably poured to a portion where the stirring is specifically bitterly carried out. By pouring the inorganic fluoride solution into the mother liquid for reaction, crystals of the oxygen introduced-rare earth activated alkaline earth metal fluorohalide stimulable phosphor precursor corresponding to Basic Foumula (3) are deposited.

In the present invention, the solvent is preferably removed while the inorganic material solution is added. Namely, in the present invention, abovementioned process A and process B are preferably carried out in parallel. The time to remove the solvent is not specifically limited as far as the inorganic solution is being added.

Further, process B is preferably longer than process A. Namely, the solvent is preferably removed in parallel with the addition of the inorganic material solution, where the process to remove the solvent takes longer time than the process to add the inorganic material solution. The ratio of the total mass after the solvent is removed (removal ratio) based on the total mass before the solvent is removed (the sum of the mass of the reaction mother liquid and the mass of the added solution) is preferably 0.97 or less, specifically preferably 0.95 or less, and preferably 0.5 or more, with respect to, for example, the viscosity of the reaction solution, the productivity, the shape of the precursor crystal and the diameter distribution of the crystals.

Generally, as the method to remove a solvent, a method to heat the solution to evaporate the solvent is chosen. Also in the present invention, this method is useful. By removing the solvent, a precursor having a desired composition is obtained. Further, in order to improve the productivity, or to keep the particle shape, another method to remove the solvent is preferably employed in parallel. The method to remove the solvent employed in parallel is not specifically limited. It is possible to select a separation film such as a reverse osmotic membrane. In the present invention, the following removal method is preferably employed with respect to the productivity.
1. Dry gas aeration
   In a. closed reaction vessel, at least two openings are provided, through which dry gas is allowed to pass. Any gas is optionally selected but common air or nitrogen is preferred in terms of safety. The solvent is removed concomitantly with the aerating gas, depending on the saturated water vapor content in the gas. Besides permeating through openings in the reaction vessel, it is useful to allow the gas to bubble through a liquid phase to cause the solvent to be absorbed into the bubbles.
2. Evacuation
   As is well known, vapor pressure is lowered by evacuation. Thus, a solvent is efficiently removed under reduced pressure. The extent of the reduced pressure is optimally selected, depending on the kind of solvent. In cases where water is used as a solvent, for example, the reduced pressure is preferably at most 86 kPa.
3. Liquid membrane
   Removal of a solvent can be efficiently effected by enlarging the vaporization area. In cases when undergoing reaction by heating with stirring in a reaction vessel of a given volume, heating is generally done in such a manner that a heating means is immersed into the liquid or is provided outside the vessel. In this case, the heat transfer area is limited to the portion of the heating means in contact with the liquid, so that the heat transfer area decreases with removal of the solvent, retarding removal of the solvent. To prevent such retardation, using a pump or a stirrer, the reaction solution is sprayed onto the wall of the reaction vessel to increase the heat transfer area. This method of spraying liquid onto the wall of the reaction vessel to form a liquid membrane is known as a wetted wall method. The wetted wall can be formed not only using a pump but also using a stirrer described in Japanese Patent O.P.I. Publication Nos. 6-335627 and 11-235522.

These methods are employed alone or in combination, Examples thereof include the combination of the formation of the wetted wall and maintaining the reaction vessel under the reduced pressure and the combination of the formation of the wetted wall and dry gas aeration. Of these, the former is preferred, as described in JP-A No. 6-335627 and Japanese Patent Application No. 2002-35202.

The resulting crystals of the phosphor precursor are separated from the solution through filtration or centrifugation, washed sufficiently with liquid such as methanol and then dried. To the dried crystals of the phosphor precursor is added an anti-sintering agent such as fine alumina powder or fine silica powder, which adheres to the surface of the crystals. It is possible to save addition of the anti-sintering agent by selecting the calcination conditions.

Then, this method puts the phosphor precursor crystals in a heat-resistant vessel such as a quartz boat, alumina crucible, or quartz crucible, puts the heat-resistant vessel in the center of an electric furnace, and calcinates the phosphor precursor crystals without sintering. The calcinating temperature should preferably 400 - 1,300 °C and more preferably 500 - 1,000 °C. The calcinating time is dependent upon the quantity of the phosphor precursor crystals in the boat or crucible, the calcinating temperature, and take-up temperature, but it is preferably 0.5 - 12 hours.

The gas atmosphere in the furnace for calcinations can be a neutral gas atmosphere such as nitrogen gas atmosphere and argon gas atmosphere, a weak-reducing atmosphere such as a nitrogen gas atmosphere containing a little hydrogen gas and a carbon dioxide gas atmosphere containing carbon monoxide, or an atmosphere containing a trace of oxygen. A preferable calcination method is disclosed by JP-A No. 2000-8034,

As described above, an objective oxygen introduced-rare earth activated alkaline earth metal fluorohalide stimulable phosphor is obtained and a radiation image conversion panel having the phosphor layer containing the above stimulable phosphor is prepared. The producing method of the radiation image conversion panel will be described in detail below.

### (Support)

As the support of the radiation image conversion panel of the present invention, varieties of polymer films are usable. Particularly the materials are preferable if they can be processed into flexible sheet or web that can be used as information recording material. In this point of view, examples of a preferable film include plastic films such as cellulose acetate, polyester, polyethylene terephthalate, polyethylene naphthalate, polyamide, polyimide, triacetate, and polycarbonate films.

The thickness of the support layer is dependent upon the material of the support but generally it is 80 - 1,000 µm and more preferably 80 - 500 µm for convenience in handling. The surface of the support can be smooth or matted to increase the adhesion of the support to the stimulable phosphor layer.

The support may have an undercoat layer to increase the adhesion between the support and the stimulable phosphor layer.

The undercoat layer of the present invention preferably contain a crosslinkable polymer resin and its crosslinking agent.

Any polymer resin can be used for the undercoat layer. Examples of a polymer resin include: polyurethane, polyester, vinyl chloride copolymer, vinyl chloride-vinyl acetate copolymer, vinyl chloride-vinylidene chloride copolymer, vinyl chloride-acrylonitrile copolymer, butadiene-acrylonitrile copolymer, polyamide resin, polyvinyl butyral, cellulose derivative (such as nitrocellulose), styrene-butadiene copolymer, a variety of synthetic rubber resins, phenol resin, epoxy resin, urea resin, melamine resin, phenoxy resin, silicone resin, acrylic resin and urea formamide resin. Among them, polyurethane, polyester, vinyl chloride copolymer, polyvinyl butyral, and nitro-cellulose are preferable. Further, the mean glass transition temperature (Tg) of polymer resin for the undercoat layer is preferably 25 °C or more and more preferably 25 - 200 °C.

The crosslinking agent usable in the undercoat layer of the present invention can be any crosslinking agent. It can be, for example, multifunctional isocyanate and its derivative, melamine and its derivative, amino resin and its derivative, and so on. Among them, multifunctional isocyanate compounds are preferable as the crosslinking agent. Commercially available multifunctional isocyanate compounds are, for example, CORONATE HX and CORONATE 3041 produced by Nippon Polyurethane Industry Co. Ltd.

The undercoat layer can be formed on the support by the following method, for example.

First, this method prepares an undercoat layer coating liquid by adding a polymer resin and a crosslinking agent which are selected from the above to an adequate solvent, for example, a solvent which is used for preparation of a phosphor layer coating liquid (to be explained later) and fully mixing thereof.

The quantity of the crosslinking agent to be used is dependent upon the characteristics of a target radiation image conversion panel, raw materials for stimulable phosphor layers and the supports, and polymer resins for undercoat layers. To assure the adhesion of the stimulable phosphor layer to the support, the weight of the crosslinking agent should be at most 50% and preferably 15 - 50% by weight of the polymer resin.

The thickness of the undercoat layer is dependent upon the characteristics of a target radiation image conversion panel, raw materials for stimulable phosphor layers and the supports, and polymer resins for undercoat layers.
Generally, the thickness should preferably be 3 - 50 µm and more preferably 5 - 40 µm.

Typical binders for the phosphor layer in the present invention are, for example, proteins (such as gelatine), polysaccharide (such as dextran), or natural polymer substances (such as gum arabic) and synthetic high polymer substances (such as polyvinyl butyral, polyvinyl acetate, nitrocellulose, ethylcellulose, vinylidenechloride-vinyl chloride copolymer, polyalkyl(meth)acrylate, vinyl chloride-vinylacetate copolymer, polyurethane, cellulose acetate butylate, polyvinyl alcohol, and linear polyester). However, it is preferable that the binder is a resin which contains thermoplastic elastomer as a main ingredient. Such thermoplastic elastomers are, for example, polystyrene-related, polyolefin-related, polyurethane-related, polyester-related, polyamide-related, polybutadiene-related, ethylene vinyl acetate related, polyvinyl chloride related, natural rubber related, fluorine rubber related, polyisoprene-related, chlorinated polyethylene related, styrene-butadiene rubber and silicone rubber related thermoplastic elastomers. Amon the above thermoplastic elastomers, polyurethane- and polyester-related thermoplastic elastomers are preferable because they have a strong bonding force with phosphor, a good dispersibility, and a good ductility. They are preferable because they can increase the bendng resistance of the sensitizing screen. Here, these binders can be cross-linked by proper crosslinking agents.

The mixing ratio of the binder and the stimulable phosphor in the coating liquid is dependent upon the haze ratio setting of the radiation image conversion panel, but preferably the binder should be 1 - 20 parts by weight and more preferably 2 - 10 parts by weight of the stimulable phosphor.

The radiation image conversion panel having a coated phosphor layer can be coated with a film for protection. Such films can be polyester, polymethacrylate, nitrocellulose film, and cellulose acetate films, each of which has an excitation-light absorption layer whose haze ratio is at least 5% and less than 60% measured by a method defined in ASTMD-1003. Drawn polyethylene terephthalate films and polyethylene naphthalate films are preferable as such protective films judging from film transparency and strength. Further, judging from moisture-proofing, the above films should preferably be coated with a metal oxide or silicon nitride film by vacuum evaporation.

The haze ratio of a film to be used for the protective layer can be easily controlled by the haze ratio of a resin film to be used. Industrial resin films of arbitrary haze ratios can be easily obtained. Usually, the protective film for the radiation image conversion panel must be optically very transparent. The haze ratio of the film is preferably 5% or more and less than 60% and specifically preferably 10% or more and less than 50%.

The film usable for the protective layer can have an optimum moisture-proof property by laminating a plurality of resin films or deposited films on which metal oxide or the like is vapor-deposited according to the required moisture-proofing. To prevent deterioration of the stimulable phosphor by moisture absorption, the water vapor permeability of the protective film should be at most 5.0 g/m² a day. The resin film can be laminated by any known laminating method.

It is preferable to provide an excited-light absorbing layer between the laminated resin films in order to protect the phosphor plate against physical impacts and chemical deterioration. With this, the phosphor plate can keep its performance steadily for a long time. A plurality of excited-light absorbing layers can be provided. Further, a colored adhesive layer to laminate resin films can be used as the excited-light absorbing layer.

The protective film may be bonded to the stimulable phosphor layer by means of an adhesive layer. However, it is more preferable that the protective film is provided to cover and seal the phosphor surface. (This structure is also called a sealing structure.) The phosphor plate can be sealed by any known method. It is preferable to use a moisture-proof protective film whose outermost resin layer to be contact with the phosphor plate is made of a heat-sealing resin film. This facilitates sealing of the protective film to the phosphor plate and can increase the efficiency of the sealing process. This is one of the preferred embodiments of the present invention. Further, it is preferable to sandwich the phosphor sheet between two moisture-proof protective films and heat-seal the protective film edges that run off the edges of the phosphor sheet by an impulse sealer or the like. This can prevent invasion of water into the phosphor sheet from its edges. Further it is preferable to use a laminated moisture-proof film containing one or more aluminum films instead of a moisture-proof protective film facing to the support surface. This aluminum-laminated film can completely prevent water invasion and facilitate sealing works. Furthermore, it is preferable to seal the protective films by the impulse sealer in a vacuum environment because this can prevent displacement of the phosphor sheet in the envelope of the protective films and exclude moisture from inside the envelope.

The outermost heat-sealing resin layer of the moisture-proof protective film which faces to the phosphor surface need not be bonded to the phosphor surface. "Not bonded to the phosphor surface" means that the phosphor surface is assumed to be optically and mechanically discontinuous to the moisture-proof protective film even when the phosphor surface is microscopically in point-contact with the protective film. Here, the above heat-sealing resin films indicate resin films that can be heat-sealed by a general-purpose impulse sealer. They can be, for example, ethylene vinyl acetate copolymer (EVA), polypropylene (PP), and polyethylene (PE) films.

Organic solvents usable for preparation of the phosphor layer coating liquid can be, for example, lower alcohols such as methanol, ethanol, isopropanol, and n-butanol; ketones such as acetone, methylethyl ketone, methyl isobutyl ketone, and cyclohexanon; esters of lower alcohol and lower fatty acid such as methyl acetate, ethyl acetate, and n-butyl acetate; ethers such as dioxane, ethylene glycol monoethyl ether, and ethylene glycol monomethyl ether; aromatic compounds such as triol and xylol; halogenated hydrocarbons such as methylene chloride and ethylene chloride; and their mixtures.

The coating liquid can contain various additives such as a dispersing agent to improve the dispersibility of particles in the coating liquid and a plasticizer to increase the binding force between the binder and phosphor particles in the prepared stimulable phosphor layer. Such dispersing agents can be, for example, phthalic acid, stearic acid, caproic acid, and oleophilic surfactant. Such plasticizers can be, for example, ester phosphates such as triphenyl phosphate, tricresyl phosphate, and diphenyl phosphate; ester phthalates such as diethyl phthalate and dimethoxy ethyl phthalate; ester glycolates such as ethyl phthalyl ethyl glycolate and butyl phthalyl butyl glycolate; and polyesters of polyethylene glycol and aliphatic dibasic acid such as polyester of triethylene glycol and adipic acid and polyester of diethylene glycol and succinic acid. Further, the stimulable phosphor layer coating liquid can contain a dispersing agent such as stearic acid, phthalic acid, caproic acid, and oleophilic surfactant to improve the dispersibility of stimulable phosphor particles.

A dispersing device such as a ball mill, bead mill, sand mill, atraiter, 3-roll mill, high-speed impeller disperser, Kady mill, ultrasonic disperser is used to prepare a coating liquid for the stimulable phosphor layer.

The coating liquid prepared by the above disperser is evenly applied to the surface of the support (to be explained later). A coating method can be a normal coating means such as Doctor Blade, roll coater, knife coater, comma coater, and lip coater.
The liquid layer coated onto the support by the above means is heated and dried. This is the stimulable phosphor layer formed on the support. The thickness of the stimulable phosphor layer is dependent upon the property of the target radiation image conversion panel, kind of the stimulable phosphor, mixing ratio of binder and phosphor, and so on. However, the layer thickness is usually 10 - 1,000 µm and preferably 10 - 500 µm.

### EXAMPLES

The present invention is demonstrated referring examples.

### Example 1

### (Process 1)

For synthesizing a europium activated barium fluoroiodide stimulable phosphor precursor, 2,500 ml of 3.5N aqueous solution of BaI₂ and 80 ml of 0.1N aqueous solution of EuI₃ were charged into a reaction vessel. This reaction mother liquid in the reaction vessel was kept at 83 °C while stirring. To the reaction mother liquid, 250 ml of 8N NH₄F aqueous solution was poured using a roller pump to form precipitation. After the pouring, temperature keeping and stirring were continued for 2 hours for ripening the precipitation. The precipitation was separated by filtration, washed by methanol and dried in vacuum to obtain europium-activated barium fluoroiodide (BaFI:0.004Eu) crystals.

Next, the above stimulable phosphor precursor crystal particles (BFI powder) were put into a mixed solution of methanol and 46% aqueous solution of HBr in a ratio of 98.5:1.5 and stirred for 15 minutes and then separated by filtration and washed to obtain the stimulable phosphor precursor particles having high Br content in the halogen composition at the crystal surface.

One percent by weight of an ultra fine particle powder of alumina was added and satisfactorily stirred by a mixer to uniformly adhere the ultra fine alumina powder onto the surface of the crystals for preventing variation in the particle shape caused by sintering and the particle diameter distribution caused by fusing the particles. Thus obtained particles were charged in a quartz boat and calcinated at 850 °C for 2 hours in a hydrogen atmosphere using a tube furnace to obtain europium-activated barium fluoroiodide phosphor particles.

A production example of the radiation image conversion panel is described below. As the raw materials for forming the stimulable phosphor layer, 427 g of the above obtained europium activated barium fluoroiodide phosphor, 15.8 g of polyurethane resin Desmolac 4125 manufactured by Sumitomo Bayer Urethane Co., Ltd., and 2.0 g of bisphenol A type epoxy resin were added to a methyl ethyl ketone-toluene (1:1) mixed solvent and dispersed by a propeller mixer to prepare a coating liquid having a viscosity of from 25 to 30 PS. The coating liquid was coated by a doctor blade on poly(ethylene terephthalate) film having an under coat layer and then dried at 100 °C for 15 minutes to form a stimulable phosphor layer.

After that, as materials for forming a protective layer, 70 g of fluororesin (fluoroolefin-vinyl ether copolymer Lumiflon LF100 manufactured by Asahi Glass Co., Ltd.), 25 g of a crosslinking agent (isocyanate Desmodule Z4370 manufactured by Sumitomo Bayer Urethane Co., Ltd.), 5 g of bisphenol A type resin and 10 g of silicone resin fine particle (KMP-590, manufactured by Shin-Etsu Chemical Co., Ltd., having particle diameter of 1 to 2 µm) were added to a toluene-isopropyl alcohol (1:1) mixed solvent to prepare a coating liquid. The coating liquid was coated on the above formed phosphor layer by the doctor blade and thermally cured and dried by a thermal treatment at 120 °C for 30 minutes to provide a protective layer having a thickness of 10 µm. Thus a radiation image conversion panel having the stimulable phosphor layer was obtained by the above method.

Furthermore, samples of stimulable phosphor precursor (before calcinating) were prepared by changing the concentration (percent by weight) of HBr in the mixed solvent of ethanol and water in the above Process 1 as shown in Table 1 for changing the halogen composition at the outermost surface of the stimulable phosphor particle. The halogen compositions of the outermost surface measured by the microauger electron spectroscopy are shown in Table 1. It is understood that the bromine content at the outermost surface is raised by replacing iodine by bromine accompanied with the rising of the HBr concentration.

The above samples treated by the HBr solution showed the highest Br content in the auger electron spectrum at the portion being within a deepness of 75 nm.

**Table 1**

| HBr concentration (%) | Br/I ratio | Yield (%) |
|---|---|---|
| 1.5 | 0.048 | 84.8 |
| 3.0 | 0.075 | 82.9 |
| 5.0 | 0.11 | 84.3 |
| 10.0 | 0.16 | 83.6 |
| 15.0 | 0.20 | 83.2 |

### Example 2

### (Process 2)

For synthesizing a europium activated barium fluoroiodide stimulable phosphor precursor, 2,500 ml of 3.5N aqueous solution of BaI₂ and 80 ml of 0.1N aqueous solution of EuI₃ were charged into a reaction vessel. This reaction mother liquid in the reaction vessel was kept at 83 °C while stirring. To the reaction mother liquid, 250 ml of 8N aqueous solution of NH₄F was poured using a roller pump to form precipitation. After the pouring, temperature keeping and stirring were continued for 2 hours for ripening the precipitation. The precipitation was separated by filtration, washed by methanol and dried in vacuum to obtain europium-activated barium fluoroiodide (BaFI:0.004Eu) crystals. One percent by weight of the ultra fine particle powder of alumina was added and satisfactorily stirred by a mixer to uniformly adhere the ultra fine alumina powder onto the surface of the crystals for preventing variation in the particle shape caused by sintering and the particle diameter distribution caused by fusing the particles. Thus obtained particles were charged in a quartz boat and calcinated at 850 °C for 2 hours in a hydrogen atmosphere using a tube furnace to obtain europium-activated barium fluoroiodide phosphor particles.

Thus obtained phosphor particles (BFI powder) were added into a mixed solution composed of ethanol and a 46% aqueous solution of HBr in a ratio of 98.5:1.5 and stirred for 15 minutes, then filtered and washed to obtain Br-coated BFI,Eu phosphor particles.

A production example of the radiation image conversion panel is described below. As the raw materials for forming the stimulable phosphor layer, 427 g of the above obtained europium activated barium fluoroiodide phosphor, 15.8 g of polyurethane resin Desmolac 4125 manufactured by Sumitomo Bayer Urethane Co., Ltd., and 2.0 g of bisphenol A type epoxy resin were added to a methyl ethyl ketone-toluene (1:1) mixed solvent and dispersed by a propeller mixer to prepare a coating liquid having a viscosity of from 25 to 30 Pa-s. The coating liquid was coated by the doctor blade on poly(ethylene terephthalate) film having a under coat layer and then dried at 100 °C for 15 minutes to form phosphor layers having various thicknesses.

After that, as materials for forming a protective layer, 70 g of fluororesin (fluoro-olefin-vinyl ether copolymer Lumiflon LF100 manufactured by Asahi Glass Co., Ltd.), 25 g of a crosslinking agent (isocyanate Desmodule Z4370 manufactured by Sumitomo Bayer Urethane Co., Ltd.), 5 g of bisphenol A type resin and 10 g of silicone resin fine particle (KMP-590, manufactured by Shin-Etsu Chemical Co., Ltd., having particle diameter of 1 to 2 µm) were added to a toluene-isopropyl alcohol (1:1) mixed solvent to prepare a coating liquid. The coating liquid was coated on the above formed phosphor layer by the doctor blade and thermally cured and dried by a thermal treatment at 120 °C for 30 minutes to provide a protective layer having a thickness of 10 µm. Thus a radiation image conversion panel having the stimulable phosphor layer was obtained by the above method.

Furthermore, samples of stimulable phosphor were prepared by each treating the stimulable phosphor after calcination by solutions of HBr in the mixed solvent of ethanol and water each having different concentration of HBr for changing the halogen composition at the outermost surface of the stimulable phosphor particle, respectively, in Process 2 as the same as in Example. 1.

### Comparative example

For synthesizing a europium activated barium fluoroiodide stimulable phosphor precursor, 2,500 ml of 3.5N aqueous solution of BaI₂ and 80 ml of 0.1N aqueous solution of EuI₃ were charged into a reaction vessel. The reaction mother liquid in the reaction vessel was kept at 83 °C while stirring. To the reaction mother liquid, 250 ml of 8N aqueous solution of NH₄F was poured using a roller pump to form precipitation. After the pouring, temperature keeping and stirring were continued for 2 hours for ripening the precipitation. The precipitation was separated by filtration, washed by methanol and dried in vacuum to obtain europium-activated barium fluoroiodide (BaFI:0.004Eu) crystals. One percent by weight of the ultra fine particle powder of alumina was added and satisfactorily stirred by a mixer to uniformly adhere the ultra fine alumina powder onto the surface of the crystals for preventing variation in the particle shape caused by sintering and the particle diameter distribution caused by fusing the particles. Thus obtained particles were charged in a quartz boat and calcinated at 850 °C for 2 hours in a hydrogen atmosphere using a tube furnace to obtain europium-activated barium fluoroiodide phosphor particles.

A production example of the radiation image conversion panel is described below. As the raw materials for forming the stimulable phosphor layer, 427 g of the above obtained europium-activated barium fluoroiodide phosphor, 15.8 g of polyurethane resin Desmolac 4125 manufactured by Sumitomo Bayer Urethane Co., Ltd., and 2.0 g of bisphenol A type epoxy resin were added to a methyl ethyl ketone-toluene (1:1) mixed solvent and dispersed by a propeller mixer to prepare a coating liquid having a viscosity of from 25 to 30 PS. The coating liquid was coated by the doctor blade on poly(ethylene terephthalate) film having a under coat layer and then dried at 100 °C for 15 minutes to form a phosphor layer.

After that, as materials for forming a protective layer, 70 g of fluororesin (fluoro-olefin-vinyl ether copolymer Lumiflon LF100 manufactured by Asahi Glass Co., Ltd.), 25 g of a crosslinking agent (isocyanate Desmodule Z4370 manufactured by Sumitomo Bayer Urethane Co., Ltd.), 5 g of bisphenol A type resin and 10 g of silicons resin fine particle (KMP-590, manufactured by Shin-Etsu Chemical Co., Ltd., particle diameter of 1 to 2 µm) were added to a toluene-isopropyl alcohol (1:1) mixed solvent to prepare a coating liquid. The coating liquid was coated on the above formed phosphor layer by the doctor blade and thermally cured and dried by a thermal treatment at 120 °C for 30 minutes to provide a protective layer having a thickness of 10 µm. Thus a radiation image conversion panel having the stimulable phosphor layer was obtained by the above method.

The above various radiation image conversion panels were stood for 24 hours in a test chamber conditioned at a temperature of 40 °C ± 5°C and a relative humidity of 90% ± 2% and variations in the weight, luminance and MTF during 24 hours were measured.

### (Evaluation of radiation image conversion panel)

### (Evaluation of luminance)

Each of the radiation image conversion panels was irradiated with X-ray generated at a. bulb voltage of 80 kVp and then stimulated by being operated with He-Ne laser light (633 nm). The stimulated emission light emitted from the fluorescent layer was received by a photoreceptor (a photomultiplier having spectral sensitivity of s-5) to measure the intensity of the light. Thus measured intensity of the light is defined as the luminance and the luminance after standing for 24 hours was expressed as a relative value based on the initial luminance of each of the radiation image conversion panels.

### (Evaluation of sharpness)

Each of the radiation image conversion panels was irradiated through a lead MFT chart with X-ray generated at a bulb voltage of 80 kVp from the backside of the panel and then stimulated by being operated with Iie-Ne laser light (633 nm). The stimulated emission light emitted from the fluorescent layer was received by the photoreceptor the same as the above to convert to electric signals. The signals were subjected to analogue/digital conversion and recorded on a magnetic tape. The signals recorded on the tape were analyzed by a computer for investigating the modulation transfer function (MFT) at 1 cycle/mm of the X-ray image recorded on the magnetic tape. Such the determination was carried out at 25 portions of the radiation image conversion panel. An average of thus obtained values was defined as the sharpness and the average sharpness after standing for 24 hours was expressed as a relative value based on the initial luminance of each of the radiation image conversion panels.

The results of the above evaluations are listed in Table 2.

**Table 2**

| Remarks | Process | HBr concentration (%) | Weight variation after 24 hours (40 °C, 95%) Unit g | Luminance after 24 hours (40 °C, 95%) Initial value: 1.0 | MFT after 24 hours (40 °C, 95%) Initial value: 1.0 |
|---|---|---|---|---|---|
| Comp. | | | 0.5 | 0.12 | 0.23 |
| Inv. 1 | 1 | 1.5 | 0.01 | 0.95 | 1.0 |
| Inv. 2 | 1 | 3.0 | 0.002 | 1.0 | 1.0 |
| Inv. 3 | 1 | 5.0 | 0.001 | 1.0 | 1.0 |
| Inv. 4 | 1 | 10.0 | 0.001 | 1.0 | 1.0 |
| Inv. 5 | 1 | 15.0 | 0.001 | 1.0 | 1.0 |
| Inv. 6 | 2 | 1.5 | 0.001 | 1.0 | 1.0 |
| Inv. 7 | 2 | 3.0 | 0.001 | 1.0 | 1.0 |
| Inv. 8 | 2 | 5.0 | 0.001 | 1.0 | 1.0 |
| Inv. 9 | 2 | 10.0 | 0.001 | 1.0 | 1.0 |
| Inv. 10 | 2 | 15.0 | 0.001 | 1.0 | 1.0 |

| | | | | | |
|---|---|---|---|---|---|
| Comp.: Comparative, Inv.: Inventive | | | | | |

It is understood form Table 2 that the variation in the weight, luminance and MFT during standing for 24 hours is almost negligible for the radiation image conversion panels of the present invention.

### Example 3

### «Preparation of stimulable phosphor precursor»

### (Preparation of stimulable phosphor precursor 1)

For synthesizing a europium-activated barium fluorobromide stimulable phosphor precursor, 2500 ml of a 2 moles/L aqueous solution of BaBr₂ and 26.5 ml of a 0.2 moles/L aqueous solution of EuBr₃ were charged into a pressure vessel. This reaction mother liquid in the reaction vessel was kept at 60 °C while stirring. Five milliliters of a 10 moles/L aqueous solution of ammonium fluoride was poured into the reaction mother liquid by using a roller pump while passing dried air in a rate of 10 L/min to form precipitate. After completion of reaction, the ratio of the weight before and after air passing was 0.94. The stirring was continued for 90 minutes at the same temperature. After stirring for 90 minutes, the precipitation was filtered and washed by 2,000 ml of ethanol, and dried at 80 °C. The weight of the recovered precursor was measured and compared with the weight of the charged BaBr₂ to calculate yield. The crystal structure of the precipitation obtained by the above operation was identified by X-ray diffractometry. Cu-Kα radiation was used as the X-ray. Moreover, the average diameter and the particle diameter distribution of the obtained precipitation were measured.

### (Preparation of stimulable phosphor precursor 2)

The precipitation was obtained in the same manner as the above preparation of stimulable phosphor precursor 1, except that the pressure in the reaction vessel was reduced to 74.5 kPa by a circulation aspirator when ammonium fluoride was added to concentrate the solvent. The mass ratio of the reaction solution before and after the concentration was 0.92. Calculation of yield, X-ray diffractometry of the precipitation and measurements of the average particle diameter and the particle diameter distribution were carried out in the same manner as in the stimulable phosphor precursor 1.

### (Preparation of stimulable phosphor precursor 3)

For synthesizing a europium activated barium fluorobromide stimulable phosphor precursor, 2500 ml of a 2 moles/L aqueous solution of BaBr₂ and 26.5 ml of a 0.2 moles/L aqueous solution of EuHr₃ were charged in to a reaction vessel. This reaction mother liquid in the reaction vessel was kept at 60°C while stirring. Fifty milliliters of a 10 moles/L aqueous solution of ammonium fluoride was poured to form precipitate. The stirring was continued for 90 minutes at the same temperature. After stirring for 90 minutes, the precipitation was filtered and washed by 2,000 ml of ethanol, and dried at 80°C. The weight of the recovered precursor was measured and compared with the weight of the charged BaBr₂ to calculate yield. The crystal structure of the precipitation obtained by the above operation was subjected to by X-ray diffractometry. Moreover, the average diameter and the particle diameter distribution of the obtained precipitation were measured.

### (Preparation of stimulable phosphor precursor 4)

Precipitation was obtained in the same manner as in the preparation of stimulable phosphor precursor 3 except that the amount of the ammonium fluoride was changed to 250 ml Calculation of yield, x-ray diffractometry of the precipitation and measurements of the average particle diameter and the particle diameter distribution were carried out in the same manner as in the stimulable phosphor precursor 1. As a result of X-ray diffractometry, BaF₂ as an impurity was found.

### (Preparation of stimulable phosphor precursor 5)

Precipitation was obtained in the same manner as in the preparation of stimulable phosphor precursor 3 except that the concentration of the BaBr₂ aqueous solution was changed from 2 moles/L to 0.5 moles/L. Calculation of yield, x-ray diffractometry of the precipitation and measurements of the average particle diameter and the particle diameter distribution were carried out in the same manner as in the stimulable phosphor precursor 1.

### (Preparation of stimulable phosphor precursor 6)

Precipitation was obtained in the same manner as in the preparation of stimulable phosphor precursor 3 except that the amount of the ammonium fluoride aqueous solution was changed to 600 ml. Calculation of yield, X-ray diffractometry of the precipitation and measurements of the average particle diameter and the particle diameter distribution were carried out in the same manner as in the stimulable phosphor precursor 1.

### «Preparation of stimulable phosphor»

### (Calcination)

Each of the above obtained precipitations (precursors) was calcinated as follows. To each of the above obtained precipitations, 1% by weight of the ultra fine particles of alumina were added and sufficiently stirred by a mixer for uniformly adhering the alumina ultra fine particles onto the crystal surface for preventing the variation in the particle shape caused by sintering and that in the particle diameter distribution caused by the fusion of the particles. The resultant was charged in a quartz boat and calcinated in a tube furnace at 850 °C for 2 hours in the hydrogen atmosphere to obtain a stimulable phosphor (europium activated barium fluoroiodide phosphor particles). Stimulable phosphors 1 to 6 were each obtained form stimulable phosphor precursors 1 to 6, respectively. The average particle diameter of each of the stimulable phosphors was measured by scanning electron microscopic photography.

### <<Preparation of image radiation conversion panel>>

### [Formation of under coat layer]

The following under coating liquid was coated by a doctor blade onto foamed polyethylene terephthalate film (188E60L manufactured by Toray Industries Inc.) having a thickness of 188 µm, followed by drying at 100 °C for 5 minutes to obtain an under coat layer having a dry thickness of 30 µm.

### (Under coat layer coating liquid)

To 288.2 g of a solution of polyester resin (Vylon 55SS manufactured by Toyobo Co., Ltd., solid content: 35%), 0.34 g of a β-copper phthalocyanine dispersion (solid content: 35%, pigment Content: 30%) and 11.22 g of a polyisocyanate compound (Coronate HX manufactured by Nippon Polyurethane Industry Co., Ltd.) was added as a curing agent and dispersed by a propeller mixer to prepare a under coating liquid.

### (Formation of phosphor layer)

### (Preparation of phosphor layer coating liquid)

To a mixed solvent composed of 0.13 g of methyl ethyl ketone, 0.13 g of toluene and 41.48 g of cyclohexanone, 300 g of the above prepared stimulable phosphor particle and 52.63 g of a polyester resin (Vylon 530 manufactured by Toyobo Co., Ltd., solid content: 30%, solvent: methyl ethyl ketone/toluene = 5/5) were added and dispersed by a propeller mixer to prepare a phosphor layer coating liquid. The solvent ratio of cyclohexanone in the phosphor layer coating liquid was 53%.

### (Formation of phosphor layer, preparation of phosphor sheet)

The above prepared phosphor layer coating liquid was coated by using the doctor blade onto the above prepared under coat layer so as to make a layer thickness of 180 µm and then dried for 15 °C at 100°C to form a phosphor layer for preparing a phosphor sheet.

### (Preparation of moisture resistive protective film)

A protective film having the following constitution A was used as the protective film for the phosphor layer coated side of the above prepared phosphor sheet.

### Constitution A

NY15///VMPTE12///VMPTE12///PET12///CPP20
NY: Nylon
PET: Poly(ethylene terephthalate)

CPP: Casting polypropylene

VMPTE: Alumina deposited PET (product on the market, manufactured by Toyo Metalizing Co., Ltd.)
The number attached behind each of the resin film expresses the thickness (µm) of the resin layer.

In the above, "///" represents a dry lamination adhering layer having a thickness of 3.0 µm. A two-liquid reactive urethane type adhesive was used as the adhesive to be used for dry lamination.

A dry laminated film of CPP 30 µm //aluminum film 9 µm//poly(ethylene terephthalate 188 µm was used as a protective film for the backside of the support of the phosphor sheet. In such the case, "//" represents an adhesive layer of a two-liquid reactive type urethane adhesive having a thickness of 1.5 µm.

### (Preparation of radiation image conversion panel)

Each of the above prepared phosphor sheets was cut into a 20 cm square and fused and sealed with the above prepared moisture resistive protective film at the edge portion by an impulse sealer under reduced pressure to prepare radiation image conversion panels, respectively. The distance from the fused portion to the edge of the phosphor sheet was 1 mm. The impulse heater having a width of 3 mm was used. Radiation image conversion panels 1 to 6 were each obtained from the stimulable phosphors 1 to 6, respectively.

### (Evaluation of radiation image conversion panel)

The above prepared radiation image conversion panels were each subjected to the following evaluation. Results of the evaluation are listed in Table 3 together with the yield of the stimulable phosphor precursors, X-ray diffractometry and the average particle diameter of the precipitation.

### (Evaluation of luminance)

Each of the radiation image conversion panels was irradiated with X-ray generated at a bulb voltage of 80 kVp and then stimulated by being operated with He-Ne laser light (633 nm). The stimulation emission light emitted from the phosphor layer was received by the photoreceptor (the photomultiplier having spectral sensitivity of S-5) to measure the intensity of the light. Thus measured intensity of the light is defined as the luminance and represented by a relative values when the luminance of the radiation image conversion panel 3 was set at 100.

### (Evaluation of sharpness)

Each of the radiation image conversion panels was irradiated through a lead MFT chart with X-ray generated at a bulb voltage of 80 kVp from the backside of the panel and then stimulated by being operated with He-Ne laser light (633 nm). The stimulation emission light emitted from the fluorescent layer was received by the photoreceptor the same as the above to convert to electric signals. The signals were subjected to analogue/digital conversion and recorded on a magnetic tape. The signals recorded on the tape were analyzed by a computer for investigating the modulation transfer function (MFT) at 1 cycle/mm of the X-ray image recorded on the magnetic tape. Such the determination was carried out at 25 portions of the radiation image conversion panel. An average of thus obtained values was defined as the sharpness and the average sharpness and represented by a relative value when the sharpness of the radiation image conversion panel 3 was set at 100.

**Table 3**

| Radiation image conversion panel NO. | Stimulable phosphor precursor | | | | | *1 (%) | *2 (%) | Luminance (Relative value) | Sharpness (Relative value) | Remarks |
|---|---|---|---|---|---|---|---|---|---|---|
| | No. | Average particle diameter (µm) | X-ray diffracttion | Yield | Process B | | | | | |
| 1 | 1 | 3.2 | Good | 62 | Solvent elimination by aeration | 0 | 0 | 115 | 108 | Inv. |
| 2 | 2 | 3.1 | Good | 78 | Solvent elimination by pressure reduction | 0 | 0 | 110 | 110 | Inv. |
| 3 | 3 | 3.0 | Good | 25 | Without solvent elimination | 2 | 1 | 100 | 100 | Comp. |
| 4 | 4 | 2.1 | Not good (BaF₂ is contained) | 10 | Without solvent elimination | 2 | 6 | 70 | 75 | Comp. |
| 5 | 5 | 3.3 | Good | 18 | without solvent elimination | 6 | 5 | 85 | 80 | Comp. |
| 6 | 6 | 2.9 | Good | 14 | Without solvent elimination | 4 | 4 | 90 | 75 | Comp. |

| | | | | | | | | | | |
|---|---|---|---|---|---|---|---|---|---|---|
| Inv.: Inventive, Comp.: Comparative *1: Ratio of particles having a diameter of not less than 10 µm. *2: Ratio of particles having a diameter of not larger than 0.5 µm. | | | | | | | | | | |

It is understood from Table 3 that the production method of the present invention is high in the product efficiency and the radiation image conversion panels each having the phosphor layer which contains the stimulable phosphor obtained by the production method of the present invention are superior radiation image conversion panel which is high in the luminance and excellent in the sharpness.

## Claims

1. A halide-containing stimulable phosphor comprising a halogen element, the halide-containing stimulable phosphor having different compositions of the halogen element between an outermost surface and an interior of the halide-containing stimulable phosphor.

2. The halide-containing stimulable phosphor of claim 1 comprising 3 or more halogen elements.

3. The halide-containing stimulable phosphor of claim 1 or 2, wherein, among halogen elements comprised in the outermost surface, a content of bromine is the largest.

4. The halide-containing stimulable phosphor of any one of claims 1 to 3, wherein the halide-containing stimulable phosphor is an oxygen introduced-rare earth activated alkaline earth metal fluorohalide stimulable phosphor represented by Formula (EFS1):
Formula (EFS1)
Interior: Ba₁₋ₓM²ₓFBr_{y}I_{1-y}:aM¹, bLn, cO
Outermost Surface: Ba₁₋ₓM²ₓFBr_{z}I_{1-z}:aM¹, bLn, cO
wherein M¹ is at least an alkali metal selected from the group consisting of Li, Na, K, Rb and Cs; M² is at least an alkaline earth metal selected from the group consisting of Be, Mg, Sr and Ca; Ln is at least one rare earth element selected from the group consisting of Ce, Pr, Sm, Eu, Gd, Tb, Tm, Dy, Ho, Nd, Er and Yb; and x, y, a, b and c are values meeting the following conditions:
0≤x≤0.3, 0≤y≤0.3, 0.3≤z≤1.0, 0≤a≤0.05, 0≤b≤0.2 and 0≤c≤0.1.

5. A method of producing the halide-containing stimulable phosphor of any one of claims 1 to 4 comprising the steps of:
producing a precursor of the stimulable phosphor; and
surface treating the precursor of the stimulable phosphor.

6. A radiation image conversion panel comprising a support having thereon a stimulable phosphor layer comprising the halide-containing stimulable phosphor of any one of claims 1 to 4.

7. The radiation image conversion panel of claim 6, wherein
a mass change of the radiation image conversion panel is 0.5 g or less, when the radiation image conversion panel is kept in a test chamber controlled at 40 °C ± 0.5 °C and a relative humidity of (90 ± 2) %RH for 24 hours.

8. A method of producing a radiation image conversion panel, wherein the halide-containing stimulable phosphor of any one of claims 1 to 4 is employed.

9. A method of producing a halide-containing stimulable phosphor precursor comprising the steps of:
depositing crystals of halide-containing stimulable phosphor precursor from a mixed solution prepared by adding an inorganic material solution into a halide ion solution, the step being designated as process A; and
removing a solvent of the mixed solution from which the crystals are deposited from a vessel carrying the mixed solution, the step being designated as process B.

10. The method of producing the halide-containing stimulable phosphor precursor of claim 9,
wherein
the halide ion solution contains bromine and barium; and
the inorganic material solution is an inorganic fluoride solution.

11. The method of claim 9 or 10, wherein process A and process B are simultaneously carried out.

12. The method of any one of claims 9 to 11, wherein a duration of process A is longer than a duration of process B.

13. The method of any one of claims 9 to 12, wherein a method of removing the solvent contains a plurality of methods including a method of heating the mixed solution.

14. A halide-containing stimulable phosphor precursor produced by the method of any one of claims 9 to 13.

15. A method of producing a halide-containing stimulable phosphor employing the halide-containing stimulable phosphor precursor of claim 14.

16. The method of claim 15, wherein the halide-containing stimulable phosphor is a rare earth activated alkaline earth metal fluorohalide stimulable phosphor.

17. The method of claim 16, wherein the rare earth activated alkaline earth metal fluorohalide stimulable phosphor is an oxygen introduced-rare earth activated alkaline earth metal fluorohalide stimulable phosphor represented by Formula (4):
Formula (4) Ba₁₋ₓM²ₓFX_{1-y}Br_{y}:aM¹, bLn, cO
wherein M¹ is at least an alkali metal selected from the group consisting of Li, Na, K, Rb and Cs; X is at least a halogen element selected from the group consisting of Cl and I; M² is at least an alkaline earth metal selected from the group consisting of Be, Mg, Sr and Ca; Ln is at least one rare earth element selected from the group consisting of Ce, Pr, Sm, Eu, Gd, Tb, Tm, Dy, Ho, Nd, Er and Yb; and x, y, a, b and c are values meeting the following conditions:
0≤x≤0.3, 0≤y≤1.0, 0≤a≤0.05, 0≤b≤0,2 and 0≤c≤0.1.

18. The method of claim 17, wherein y in Formula (4) is 1.

19. A halide-containing stimulable phosphor produced by the method of any one of claims 15 to 18.

20. A radiation image conversion panel comprising a stimulable phosphor layer comprising the halide-containing stimulable phosphor of claim 19.
